# EUROPEAN PATENT APPLICATION

(11) **EP 2 854 255 A1**
(43) Date of publication of application: **01.04.2015**
(21) Application number: 13794227.2
(22) Date of filing: 15.04.2013
(51) Int. Cl.: H02J 7/10

(54) **CONTROL SYSTEM**

(30) Priority: 22.05.2012 JP 2012116900
(71) Applicant: Sony Corporation, Tokyo 108-0075 (JP)
(72) Inventor: ISHIBASHI, Yoshihito, Tokyo 141-0022 (JP); SAWADA, Junichi, Fujisawa-shi Kanagawa 251-0042 (JP); KAMADA, Rui, Fujisawa-shi Kanagawa 251-0042 (JP)
(74) Representative: Witte, Weller & Partner Patentanwälte mbB
(86) International application number: PCT/JP2013/002539
(87) International publication number: WO 2013/175702

(57) **Abstract**

The control system includes, for example, a plurality of first devices and at least one second device connected to each of the plurality of first devices. The first device includes a plurality of conversion units configured to convert first voltage supplied from a power generator to second voltage in accordance with a level of the first voltage, and the second device includes a power storage unit and a charging control unit configured to control charging the power storage unit. The second voltage output from at least one conversion unit out of the plurality of conversion units is supplied to the second device, and the charging control unit controls charging the power storage unit in accordance with fluctuation of the second voltage.

## Description

### TECHNICAL FIELD

The present disclosure relates to a control system.

### BACKGROUND ART

A battery is charged by power obtained utilizing renewable energy. In Patent Document 1 below, a technology whereby an electricity storage unit is charged by the power generated from a solar power generator and a wind force power generator is recited.

### CITATION LIST

### PATENT DOCUMENT

Patent Document 1: Japanese Patent Application Laid-Open No. 2009-232668

### SUMMARY OF THE INVENTION

### PROBLEMS TO BE SOLVED BY THE INVENTION

According to the technology recited in Patent Document 1, charging the electricity storage unit can be executed only by on-off control. There is a problem in which charging cannot be controlled in accordance with a change of the output from the solar power generator and the wind force power generator.

Therefore, an object of the present disclosure is to provide a control system whereby charging is controlled in accordance with the change of the output from the solar power generator and the wind force power generator.

### SOLUTIONS TO PROBLEMS

To achieve the above-described object, the present disclosure provides, for example, a control system, including a plurality of first devices and at least one second unit connected to each of the plurality of first devices, wherein
the first device includes a plurality of conversion units configured to convert first voltage supplied from a power generator to second voltage in accordance with a level of the first voltage,
the second unit includes a power storage unit and a charging control unit configured to control charging the power storage unit,
the second voltage output from at least one conversion unit out of the plurality of conversion units is supplied to the second device, and
the charging control unit controls charging the power storage unit in accordance with fluctuation of the second voltage.

### EFFECTS OF THE INVENTION

According to at least one embodiment, charging can be controlled in accordance with output from a solar power generator and a wind force power generator.

### BRIEF DESCRIPTION OF DRAWINGS

Fig. 1 is a block diagram illustrating an exemplary system configuration.
Fig. 2 is a diagram illustrating an exemplary connection between a control unit and a battery unit.
Fig. 3 is an explanatory diagram for a brief configuration of the control unit.
Fig. 4 is an explanatory diagram for the configuration of the control unit.
Fig. 5 is an explanatory diagram for a concrete configuration of a conversion unit.
Fig. 6 is an explanatory diagram for a configuration related to a power supply system of the control unit.
Fig. 7 is an explanatory diagram for a configuration of a battery unit.
Fig. 8 is an explanatory diagram for a concrete configuration of a charging control unit.
Fig. 9 is an explanatory diagram for a configuration related to a power supply system of the battery unit.
Fig. 10A is a graph illustrating voltage-current characteristics of a solar cell. Fig. 10B is a graph (P-V curve) illustrating a relation between terminal voltage of the solar cell and generated power from the solar cell in the case where the voltage-current characteristics of the solar cell is indicated by a specific curve.
Fig. 11 is an explanatory diagram for changes of an operating point relative to changes of curves indicating the voltage-current characteristics of the solar cell.
Fig. 12A is an explanatory diagram for changes of the operating point at the time of executing cooperative control in the case where illuminance to the solar cell is reduced. Fig. 12B is an explanatory diagram for changes of the operating point at the time of executing cooperative control in the case where load from the standpoint of the solar cell is increased.
Fig. 13 is an explanatory diagram for changes of the operating point at the time of executing cooperative control in the case where both illuminance to the solar cell and the load from the standpoint of the solar cell are changed.
Fig. 14 is a diagram illustrating an exemplary schedule table.
Fig. 15 is a diagram illustrating another exemplary schedule table.
Fig. 16 is a flowchart illustrating an exemplary processing flow.
Fig. 17 is a flowchart illustrating the exemplary processing flow.
Fig. 18 is an explanatory diagram for periods during which the conversion unit is actually turned on.
Fig. 19 is a diagram illustrating an exemplary schedule table in which maximum numbers of the conversion units to be turned on are described.
Fig. 20 is an explanatory diagram for a modified example.

### MODE FOR CARRYING OUT THE INVENTION

In the following, embodiments according to the present disclosure will be described with reference to the drawings. Note that description will be provided in the following order.

### <1. First Embodiment>

### <2. Second Embodiment>

### <3. Third Embodiment>

### <4. Modified Example>

Note that the embodiments described below are preferred examples of the present disclosure, and contents of the present disclosure are not to be limited to these embodiments.

### <1. First Embodiment>

### [1-1. System Configuration]

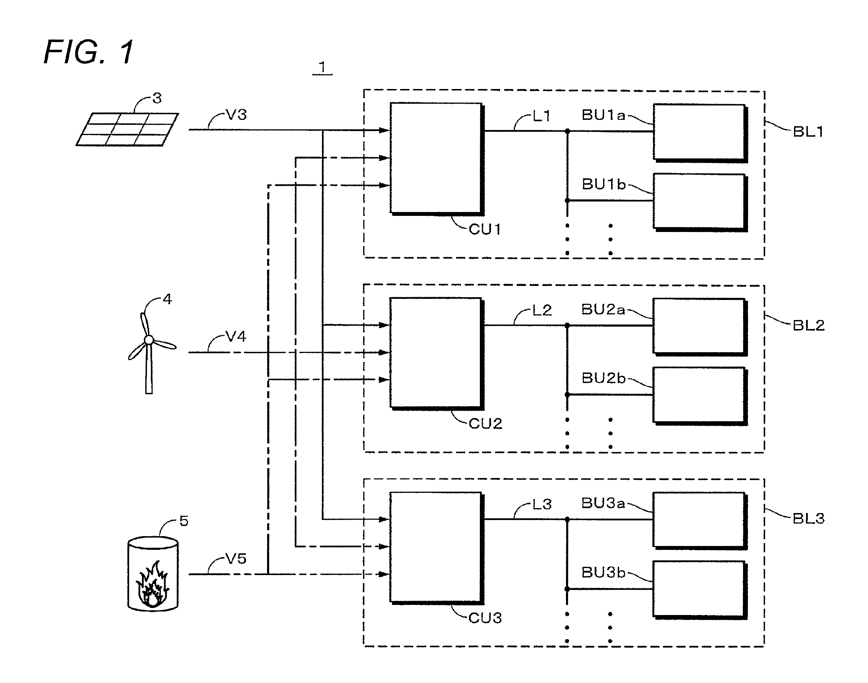

Fig. 1 is an exemplary system configuration according to a first embodiment of the present disclosure. For example, output from a plurality of power generators is supplied to a system 1. For the power generators, a solar power generator, a wind force power generator, and a biomass power generator are exemplified. In Fig. 1, a solar power generator 3 is schematically illustrated by solar panels. A wind force power generator 4 is schematically illustrated by a windmill. A biomass power generator 5 is schematically illustrated by a tank and flame inside the tank. A known solar power generator can be applied as the solar power generator 3. The same can be applied to the wind force power generator 4 and the biomass power generator 5.

The power generator generates power based on energy existing in the surrounding environment, for example, light, heat, oscillation, radio wave, temperature difference, ion concentration difference, and so on. The power generator may be formed of a device that generates the power by grid-connected power (grid) and human power. Also, the power generator may be formed of a plurality of the same kinds of power generators.

Direct current (DC) voltage obtained from each of the power generators is supplied to a block in a latter stage. In the case where alternating current (AC) voltage is obtained from the power generator, the alternating current voltage is converted to the direct current voltage to be supplied to the block in the latter stage. The system 1 includes a plurality of blocks. The plurality of blocks is exemplified as a block BL1, a block BL2, and a block BL3. In the case where there is no need to identify the individual blocks, the block is conveniently referred to as a block BL. Note that the block is a term provided for convenience of explanation and does not have any special meaning. A configuration and the like of the block BL will be described below.

The block BL is connected to each of the power generators in parallel. Direct-current voltage V3 supplied from the solar power generator 3 is supplied to the block BL1, block BL2, and block BL3. Direct-current voltage V4 supplied from the wind force power generator 4 is supplied to the block BL1, block BL2, and block BL3. Direct-current voltage V5 supplied from the biomass power generator 5 is supplied to the block BL1, block BL2, and block BL3. Each one of the voltage V3, voltage V4, and voltage V5 is an example of first voltage.

Values of the voltage V3, voltage V4, and voltage V5 may fluctuate in accordance with a device size and the like, but hereinafter, description will given for a case where the voltage V3, voltage V4, and voltage V5 may fluctuate within a range from 75 V (volt) to 100 V. In Fig. 1, the voltage V3 is indicated by a solid line, the voltage V4 by a one-dot chain line, and the voltage V5 by a two-dot chain line.

### [1-2. Block Configuration]

An exemplary configuration of the block BL will be described by exemplifying the block BL1. The block BL1 is configured to include, for example, one control unit and at least one battery unit. The control unit is an example of a first device, and the battery unit is an example of a second device.

A control unit CU1 is connected to, for example, a battery unit BU1a, a battery unit BU1b, and a battery unit BU1c. In the case where there is no need to identify the individual battery units, the battery unit is conveniently referred to as a battery unit BU1. In Fig. 1, the battery unit BU1a and the battery unit BUlb are illustrated.

The control unit CU1 includes, for example, a plurality of ports, and the battery unit BU1 is freely detachably attached to each of the ports. In other words, the number of the battery units BU1 to be connected to the control unit CU1 can be suitably changed. For example, when the battery unit BU1a, battery unit BU1b, and battery unit BU1c are connected to the control unit CU1, a new battery unit can be connected to the control unit CU1. For example, when the battery unit BU1a, battery unit BU1b, and battery unit BU1c are connected to the control unit CU1, the battery unit BUlb can be detached from the control unit CU1.

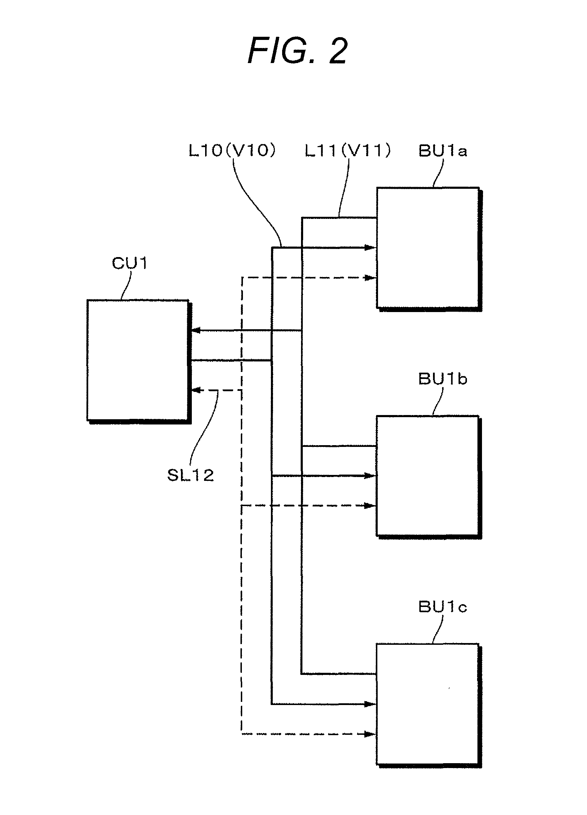

The battery unit BU1 is connected to the control unit CU1 via a line L1. As illustrated in Fig. 2, the line L1 includes, for example, a power line L10 through which power is transmitted from the control unit CU1 to the battery unit BU1, and a power line L11 through which power is transmitted from the battery unit BU1 to the control unit CU1. The line L1 further includes a signal line SL12 for communication between the control unit CU1 and each of the battery units BU1.

Meanwhile, in the following description, description will be given under the condition that power transmission and communication are executed via wire; however the power transmission and communication may be executed via radio, too. In this case, there is no need to provide a physical line, namely, the line L1.

Direct-current voltage V10 is supplied from the control unit CU1 to the battery unit BU1 via the power line L10. Among the plurality of battery units BU1, charging is executed based the voltage V10 toward a battery unit BU1 to which a charging instruction is given. Charging may be executed for one battery unit BU1 and also for the plurality of battery units BU1.

Charging is not executed for the battery unit BU1 that is currently discharging. Direct current voltage V11 is output from a battery unit BU1 to which a discharging instruction has been given. The voltage V11 is supplied to an external device, namely, a load, via the control unit CU1, for example. The voltage V11 may also be directly supplied to the external device without passing the control unit CU1.

Communication between the control unit CU1 and each of the battery units BU1 is executed in accordance with the specifications such as SMBus (System Management Bus) and UART (Universal asynchronous Receiver-Transmitter). The signal line SL12 is a line shared among the battery units BU1, and a control command is transmitted through the signal line SL12. For instance, the control command is transmitted from the control unit CU1 to a predetermined battery unit BU1.

Each of the battery units BU1 can be individually controlled by the control command. The battery unit BU1 can identify a port number of a port to which the battery unit itself is connected. For instance, an identifier indicating the port number is described in a header of the control command. The battery unit BU1 can identify whether the control command is directed to own unit or not by analyzing the header of the control command.

Further, the battery unit BU1 can notify the control unit CU1 of own information through communication. The battery unit BU1 can notify the control unit CU1 of, for example, residual capacity of a battery included in the battery unit BU1. The identifier indicating the port number is described in the header of a notification signal from the battery unit BU1 to control unit CU1. This enables the control unit CU1 to identify which one of the battery units BU1 has transmitted the notification signal.

An application mode described below may be possible, using the plurality of battery units BU1, for example. A control command that provides a charging instruction is transmitted to the battery unit BU1a from the control unit CU1 to execute control for charging the battery unit BU1a. A control command that provides a discharging instruction is transmitted to the battery unit BUlb from the control unit CU1 to execute control for discharging from the battery unit BU1b. The battery unit BU1c is used as a standby power source. For instance, when the residual capacity of the battery unit BUlb is reduced, a using battery unit is switched from the battery unit BUlb to the battery unit BU1c. The above-described application mode is only an example and the application mode is not limited thereto.

A configuration of the block BL2 is, for example, same as the configuration of the block BL1. The block BL2 is configured to include the control unit CU2. The control unit CU2 is connected to, for example, a battery unit BU2a, a battery unit BU2b, and a battery unit BU2c via a line L2. In Fig. 1, the battery unit BU2a and battery unit BU2b are illustrated.

The line L2 includes, for example, a power line L20 through which the power is transmitted from the control unit CU2 to a battery unit BU2, and a power line L21 through which the power is transmitted from the battery unit BU2 to the control unit CU2. The line L2 further includes a signal line SL22 for communication between the control unit CU2 and each of the battery units BU2.

A configuration of the block BL3 is, for example, same as the configuration of the block BL1. The block BL3 is configured to include the control unit CU3. The control unit CU3 is connected to, for example, a battery unit BU3a, a battery unit BU3b, and a battery unit BU3c via a line L3. In Fig. 1, the battery unit BU3a and the battery unit BU3b are illustrated.

The line L3 includes, for example, a power line L30 through which the power is transmitted from the control unit CU3 to a battery unit BU3, and a power line L31 through which the power is transmitted from the battery unit BU3 to the control unit CU3. The line L3 further includes a signal line SL32 for communication between the control unit CU3 and each of the battery units BU3.

Note that any constitutional difference may exist between the respective blocks BL without departing from the scope and sprit of the present disclosure. In the following description, repeating the same description may be avoided by mentioning that the configuration is the same; however, this does not preclude existence of the constitutional difference without departing from the scope and sprit of the present disclosure.

### [1-3. Configuration of Control Unit]

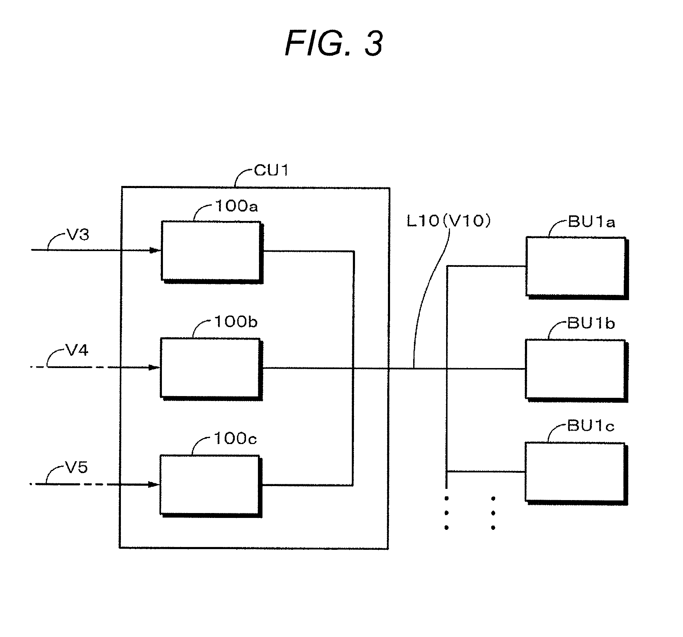

Fig. 3 is an exemplary schematic configuration of the control unit CU1. The control unit CU1 includes a conversion unit 100a, a conversion unit 100b, and a conversion unit 100c. In the case where there is no need to identify the individual conversion units, the conversion unit is conveniently referred to as a conversion unit 100. The voltage V3 which is output voltage of the solar power generator 3 is supplied to the conversion unit 100a. The conversion unit 100a converts the voltage V3 to a voltage V10 in accordance with a level of the voltage V3. As described above, the voltage V3 is the voltage that fluctuates within a range, for example, from 75 V to 100 V. The voltage V10 is the direct current voltage that fluctuates within a range, for example, from 45 V to 48 V.

When the voltage V3 is 75 V, the conversion unit 100a converts the voltage V3 such that the voltage V10 becomes 45 V. When the voltage V3 is 100 V, the conversion unit 100a converts the voltage V3 such that the voltage V10 becomes 48 V. In accordance with the change of the voltage V3 within the range from 75 V to 100 V, the conversion unit 100a converts the voltage V3 to the voltage V10 such that the voltage V10 substantially linearly changes in the range from 45 V to 48 V. Various kinds of feedback circuits may also be used instead of linearly changing a changing rate. An output obtained by the feedback circuit may be output from the conversion unit 100a.

The conversion unit 100b and conversion unit 100c operate same as the conversion unit 100a. When the voltage V4 is 75 V, the conversion unit 100b converts the voltage V4 such that the voltage V10 becomes 45 V. When the voltage V4 is 100 V, the conversion unit 100a converts the voltage V4 such that the voltage V10 becomes 48 V. In accordance with the change of the voltage V4 within the range from 75 V to 100 V, the conversion unit 100a converts the voltage V4 to the voltage V10 such that the voltage V10 substantially linearly changes in the range from 45 V to 48 V. Meanwhile, in the case where the voltage V4 changes in the range from 200 V to 420 V, for example, the conversion unit 100b generates the voltage V10 in the range from 45 V to 48 V by stepping down the voltage V4. Thus, each of the conversion units 100 is configured to suitably operate in accordance with the input voltage.

When the voltage V5 is 75 V, the conversion unit 100c converts the voltage V5 such that the voltage V10 becomes 45 V. When the voltage V5 is 100 V, the conversion unit 100c converts the voltage V5 such that the voltage V10 becomes 48 V. In accordance with the change of the voltage V5 in the range from 75 V to 100 V, the conversion unit 100a converts the voltage V5 such that the voltage V10 substantially linearly changes in the range from 45 V to 48 V. Meanwhile, in the case where the voltage V5 changes in the range from 10 V to 40 V, for example, the conversion unit 100c boosts the voltage V5 to generate the voltage V10 in the range from 45 V to 48 V. Thus, the conversion unit 100 is configured to suitably operate in accordance with the input voltage.

The voltage V10 is output from each of the conversion unit 100a, conversion unit 100b, and conversion unit 100c, and one of those is supplied to the battery unit BU1 via the power line L10. For instance, the largest voltage V10 is supplied to the battery unit BU1 via the power line L10. In the case where power consumption in the battery unit BU1 is large, the outputs from the plurality of conversion units may be combined and supplied to the battery unit BU1.

Note that the output to be supplied to the battery unit BU1 can be selected from among the plurality of outputs from the plurality of conversion units 100. As described below, a variable resistor (volume) is provided in each of the conversion unit 100a, conversion unit 100b, and conversion unit 100c, for example. The voltage V10 output from a predetermined conversion unit 100 can be supplied to the battery unit BU1 by suitably setting a value of the variable resistor.

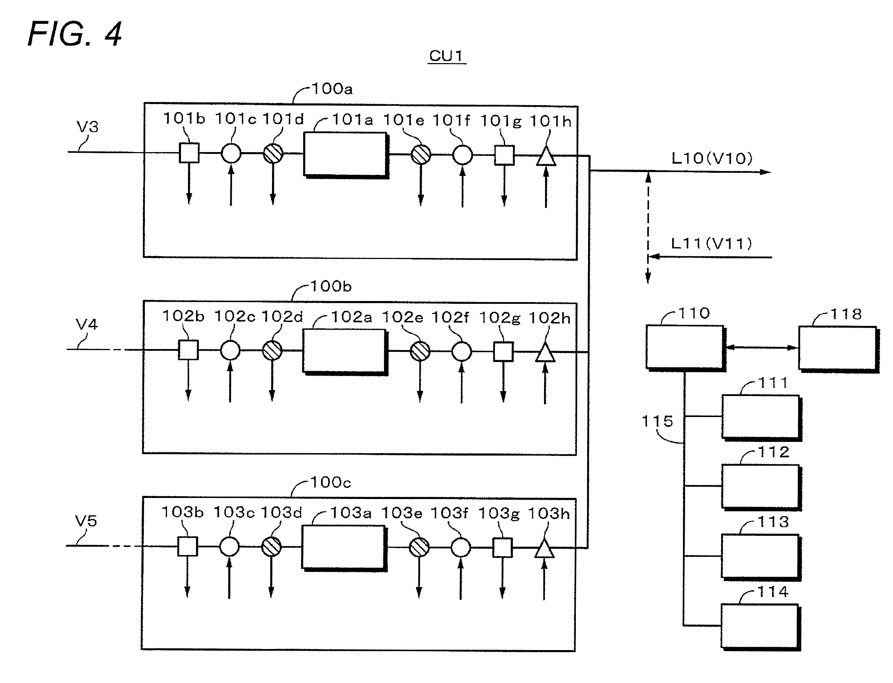

Fig. 4 is an exemplary schematic configuration of the control unit CU1. The conversion unit 100a of the control unit CU1 includes a DC-DC converter 101a that converts (steps down) the voltage V3 to the voltage V10. In the case where the voltage V3 is lower than 45 V, for example, the DC-DC converter 101a is configured as a boost DC-DC converter. For a configuration of the DC-DC converter 101a, a known configuration can be applied. Further, in the case where alternating current voltage is supplied as the voltage V3, an AC-DC converter may be provided in a former stage of the DC-DC converter 101a.

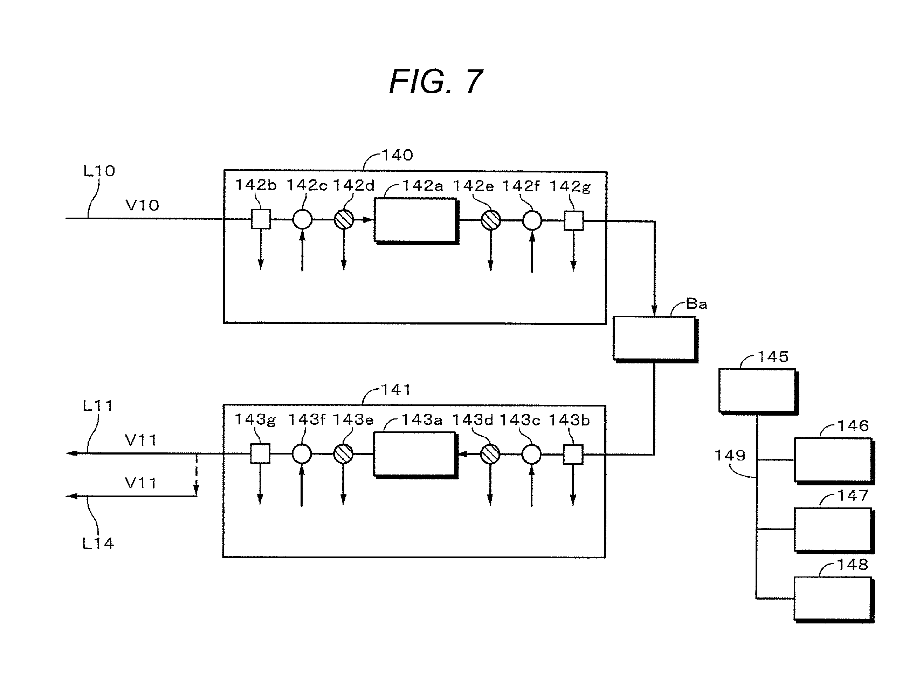

A voltage sensor, an electronic switch, and a current sensor are connected to each of an input stage and an output stage of the DC-DC converter 101a. Further, the variable resistor is connected to the output stage of the DC-DC converter 101a. In Fig. 4 and Fig. 7 later described, the voltage sensor is indicated by a rectangular mark, the electronic switch by a circle mark, the current sensor by a circle mark with diagonal lines, and the variable resistor by a triangular mark, respectively in a simple manner.

A voltage sensor 101b, an electronic switch 101c, and a current sensor 101d are sequentially connected to the input stage of a DC-DC converter 101a. A current sensor 101e, an electronic switch 101f, a voltage sensor 101g, and a variable resistor 101h are sequentially connected to the output stage of the DC-DC converter 101a.

The conversion unit 100b and the conversion unit 100c have the configuration same as the conversion unit 100a, for example. The conversion unit 100b includes a DC-DC converter 102a. A voltage sensor 102b, an electronic switch 102c, and a current sensor 102d are sequentially connected to the input stage of the DC-DC converter 102a. A current sensor 102e, and an electronic switch 102f, a voltage sensor 102g, and a variable resistor 102h are sequentially connected to the output stage of the DC-DC converter 102a.

The conversion unit 100c includes a DC-DC converter 103a. A voltage sensor 103b, an electronic switch 103c, and a current sensor 103d are sequentially connected to the input stage of the DC-DC converter 103a. A current sensor 103e, an electronic switch 103f, a voltage sensor 103g, and a variable resistor 103h are sequentially connected to the output voltage of the DC-DC converter 103a. The output from the conversion unit 100 can be stopped by switching off the electronic switch in each of the conversion units 100. For instance, the output from the conversion unit 100a can be stopped by switching off at least one of the electronic switch 101c and the electronic switch 101f.

The resistance values of the variable resistor 101h, variable resistor 102h, and variable resistor 103h may be adjusted, instead of controlling the electronic switch. The output of the DC-DC converter 101a and the like can be limited by adjusting the resistance value of the variable resistor. For example, the resistance values of the variable resistor 102h and the variable resistor 103h are set to a predetermined value by setting the resistance value of the variable resistor 101h to zero or nearly zero.

The output voltage of the DC-DC converter 102a is stepped down by the variable resistor 102h, and the output voltage of the DC-DC converter 103a is stepped down by the variable resistor 103h. The voltage V10 which is the largest voltage and output from the conversion unit 100a is supplied to the power line L10, and the voltage V10 is supplied to the battery unit BU1. Thus, one of the outputs from the three conversion units (conversion unit 100a, conversion unit 100b, conversion unit 100c) can be selected by suitably adjusting the resistance values of the three variable resistors (variable resistor 101h, variable resistor 102h, variable resistor 103h).

The control unit CU1 further includes a CPU (Central Processing Unit) 110. A memory 111, a D/A (Digital to Analog) converter 112, an A/D (Analog to Digital) converter 113, and a temperature sensor 114 are connected to the CPU 110 via a bus 115. The bus 115 is formed of an I²C bus, for example.

The CPU 110 controls respective sections of the control unit CU1. The CPU 110 executes, for example, on-off control for the electronic switch of the conversion unit 100, and executes control in the conversion unit 100 in accordance with sensor information supplied from the voltage sensor and current sensor.

Note that arrows indicating the voltage sensors and current sensors show that the sensor information obtained by the sensors is supplied to the CPU 110 via the A/D convertion unit 113. Further, the arrows directed to the marks indicating the electronic switches and variable resistors show that the electronic switches and variable resistors are controlled by the CPU 110.

The CPU 110 further controls the battery unit BU1 connected to the control unit CU1. For instance, the CPU 110 generates a control command to turn on a power source of a predetermined battery unit BU1, and a control command that provides an instruction for charging or discharging with respect to a predetermined battery unit BU1. Then, the CPU 110 transmits the generated control command to the signal line SL12. Further, the CPU 10 acquires information transmitted from each of the battery units BU1 (e.g., residual capacity in the battery of the battery unit BU1), and executes control in accordance with the acquired information.

The memory 111 is a general term that represents a ROM (Read Only Memory) where programs executed by the CPU 110 are stored, a RAM (Random Access Memory) used as a work memory when the CPU 110 executes processing, a non-volatile memory such as an EEPROM (Electrically Erasable and Programmable Read Only Memory) where various kinds of data (e.g., schedule tables later described), and so on.

The D/A converter 112 converts digital data to analog data. The A/D convertion unit 113 converts the analog data to the digital data. The analog-data sensor information is supplied from, for example, the voltage sensor and current sensor to the A/D convertion unit 113. The A/D convertion unit 113 converts the analog-data sensor information to digital-data sensor information. The digital-data sensor information is supplied to the CPU 110.

The temperature sensor 114 measures ambient temperature. For instance, inner temperature of the control unit CU1 and the ambient temperature of the control unit CU1 are measured. Temperature information obtained by the temperature sensor 114 is supplied to the CPU 110 after being converted to the digital data by the A/D convertion unit 113.

The control unit CU1 may be configured to communicate with other device. For instance, the CPU 110 may be configured to have a communication function, and communication is held between the CPU 110 and the other device 118. Examples of the other device 118 may be devices such as a personal computer (PC), a tablet computer, and a smartphone.

The communication may be executed via the internet and near field communication. Examples of the near field communication include communication using infrared ray, communication based on "ZigBee (registered trademark)" standard, communication based on "Bluetooth (registered trademark)" standard, and communication based on " Wi-Fi (registered trademark)" whereby network can be easily formed.

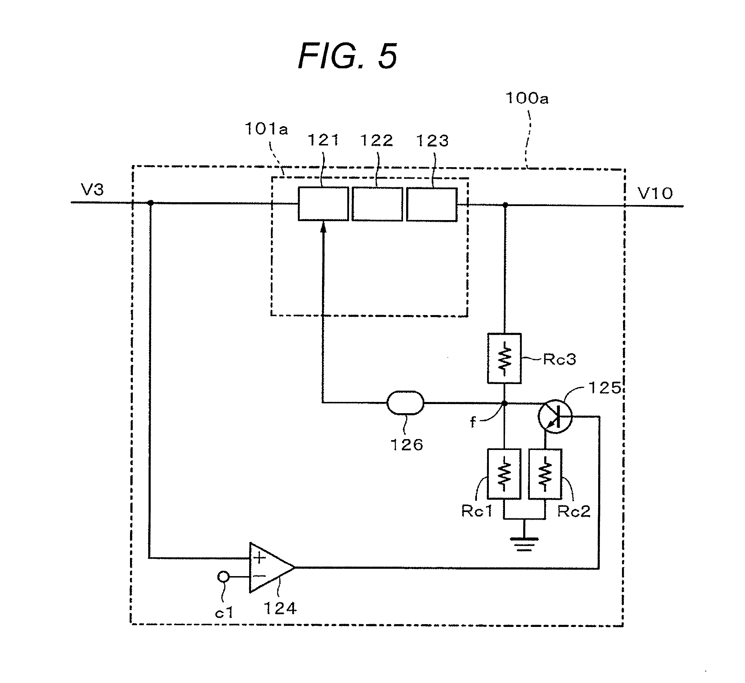

Fig. 5 is an example of concrete configuration of the conversion unit 100a. As illustrated in Fig. 5, the conversion unit 100a includes a DC-DC converter 101a and a feedforward control system later described. In Fig. 5, the voltage sensor 101b, electronic switch 101c, current sensor 101d, current sensor 101e, electronic switch 101f, voltage sensor 101g, and variable resistor 101h are not illustrated.

The DC-DC converter 101a is formed of, for example, a primary circuit 121 including a switching device, a transformer 122, and a secondary circuit 123 including a rectifying device. The DC-DC converter 101a illustrated in Fig. 5 is a current resonance converter (LLC resonant converter), for example.

A feedforward control system includes an operational amplifier 124, a transistor 125, a resistance Rc1, a resistance Rc2, and a resistance Rc3, and output from the feedforward control system is received at, for example, a control terminal provided at a driver of the primary circuit 121 of the DC-DC converter 101a. The DC-DC converter 101a adjusts output voltage from the conversion unit 100a such that input voltage to the control terminal becomes constant.

Since the feedforward control system is provided at the conversion unit 100a, the voltage V10 which is the output voltage of the conversion unit 100a is adjusted to be a voltage value within a preset range. Therefore, the control unit CU1 including the conversion unit 100a includes, for example, a function of a voltage converter that changes the output voltage (voltage V10) in accordance with the change of the input voltage (voltage V3) from the solar power generator 3.

As illustrated in Fig. 5, the output voltage is taken out from the conversion unit 100a via the primary circuit 121, transformer 122, and secondary circuit 123. The output from the control unit CU1 is transmitted to the battery unit BU1 via the power line L10. Note that the AC-DC converter is connected to a former stage of the primary circuit 121 in the case where the voltage V3 is the alternating current voltage. The AC-DC converter is, for example, a power factor correction circuit.

In the following, the feedforward control system included in the conversion unit 100a will be described.

The voltage obtained by multiplying the input voltage (voltage V3) to the conversion unit 100a by kc (kc: approximately a several tenths to a hundredth) is received at a non-inverted input terminal of the operational amplifier 124. On the other hand, the voltage obtained by multiplying predetermined constant voltage Vt₀ by kc is received at an inverted output terminal c1 of the operational amplifier 124. The input voltage (kc×Vt₀) to the inverted output terminal c1 of the operational amplifier 124 is applied to, for example, from the D/A converter 112. A value of the voltage Vt₀ is held in, for example, an embedded memory in the D/A converter 112, and the value of voltage Vt₀ can be changed, if necessary. The value of the voltage Vt₀ is held in the memory 111 connected to the CPU 110 via the bus 115, and may be transferred to the D/A converter 112. The value of the voltage Vt₀ may be a fixed value.

An output terminal of the operational amplifier 124 is connected to a base of the transistor 125, and current-voltage conversion is executed by the transistor 125 in accordance with a difference between the input voltage received at the non-inverted input terminal and the input voltage received at the inverted output terminal in the operational amplifier 124.

A resistance value of the resistance Rc2 connected to an emitter of the transistor 125 is set so as to be larger than a resistance value of the resistance Rc2 connected in parallel with the resistance Rc1.

For instance, it is assumed that the input voltage to the conversion unit 100a is the voltage sufficiently higher than the preset constant value Vt₀. At this point, the transistor 125 in turned on and a combined resistance value of the resistance Rc1 and resistance Rc2 becomes smaller than a resistance value of the resistance Rc1. Therefore, electrical potential at f point illustrated in Fig. 5 becomes close to ground potential.

Then, the input voltage to the control terminal connected via a photocoupler 126 and provided at the driver of the primary circuit 121 is decreased. The DC-DC converter 101a that has detected decrease of the input voltage to the control terminal boosts the output voltage from the conversion unit 100a such that the input voltage to the control terminal becomes constant.

In contrast, it is assumed that the terminal voltage of the solar cell connected to the control unit CU1 is decreased and the input voltage to the conversion unit 100a becomes close to the preset constant voltage Vt₀, for example.

When the input voltage to the conversion unit 100a is decreased, the transistor 125 becomes almost an on state from an off state. Due to this change of the transistor 125 from the on state to the off state, current hardly flows at the resistance Rc1 and resistance Rc2, thereby increasing the electrical potential at the f point illustrated in Fig. 5.

Then, the input voltage to the control terminal provided at the driver of the primary circuit 121 cannot be kept constant. As a result, the DC-DC converter 101a steps down the output voltage from the conversion unit 100a such that the input voltage to the control terminal is kept constant.

In other words, the conversion unit 100a boosts the output voltage in the case where the input voltage is sufficiently higher than the preset constant voltage Vt₀. Further, the conversion unit 100a steps down the output voltage when the terminal voltage of the solar cell is decreased and the input voltage becomes close to the preset constant voltage Vt₀. Thus, the control unit CU1 including the conversion unit 100a dynamically changes the output voltage in accordance with the level of the input voltage.

Further, as described below, the conversion unit 100a dynamically converts the output voltage in accordance with changes of the voltage required on the output side of the control unit CU1.

For instance, it is assumed that the number of the battery units BU1 to be charged and electrically connected to the control unit CU1 is increased while the solar power generator 3 is generating power. In other words, it is assumed that a load from the standpoint of the solar power generator 3 is increased.

In this case, the terminal voltage of the solar cell connected to the control unit CU1 is decreased because of the battery unit BU1 newly electrically connected to the control unit CU1. Then, a state of the transistor 125 becomes the off state from the on state due to the decrease of the input voltage to the conversion unit 100a, thereby stepping down the output voltage from the conversion unit 100a.

On the other hand, when the number of the battery units BU1 to be charged and electrically connected to the control unit CU1 is reduced while the solar power generator 3 is generating power, the load from the standpoint of the solar cell in the solar power generator 3 is reduced, and the terminal voltage of the solar cell connected to the control unit CU1 is increased. When the input voltage to the conversion unit 100a becomes sufficiently higher than the present constant voltage Vt₀, the input voltage to the control terminal provided at the driver of the primary circuit 121 is decreased and the output voltage from the conversion unit 100a is boosted.

Meanwhile, the resistance values of the resistance Rc1, resistance Rc2, and resistance Rc3 are suitably selected such that a value of the output voltage from the conversion unit 100a becomes a voltage value within the preset range. In other words, an upper limit of the output voltage from the conversion unit 100a is determined by the resistance values of the resistance Rc1 and the resistance Rc2. The transistor 125 is disposed in order that the value of the output voltage from the conversion unit 100a does not exceed the preset upper limit voltage value when the input voltage to the conversion unit 100a exceeds the predetermined value.

On the other hand, as described later, a lower limit of the output voltage from the conversion unit 100a is determined by the input voltage to the inverted output terminal of the operational amplifier of the feedforward control system in the charging control unit in the battery unit BU1.

Configurations of the conversion unit 100b and the conversion unit 100c are same as the configuration of the conversion unit 100a, for example. The conversion unit 100b and the conversion unit 100c operate same as the conversion unit 100a, for example.

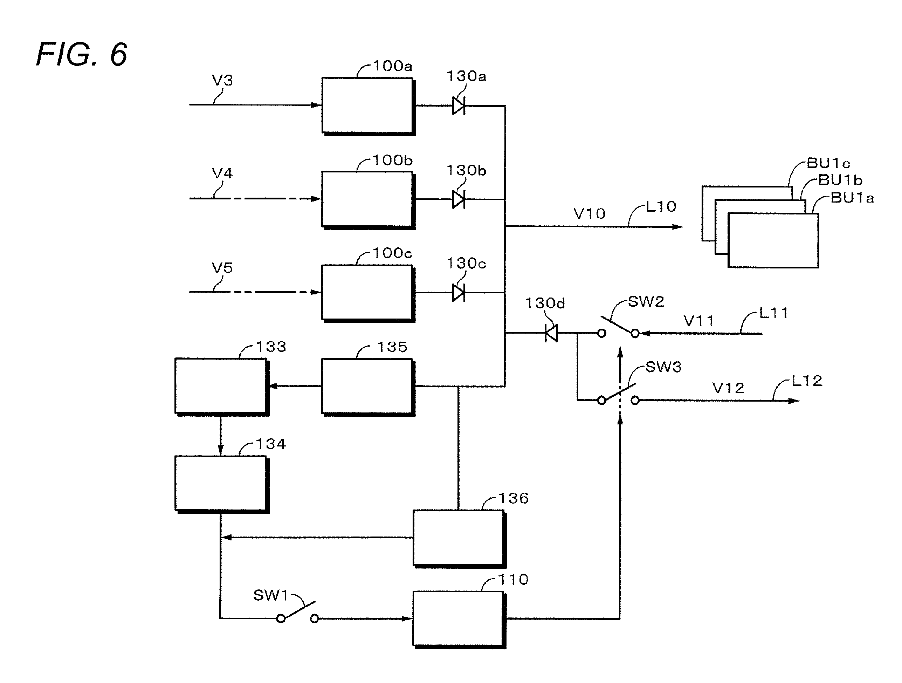

A power source of each of the control unit CU1, control unit CU2, and control unit CU3 can be independently turned on/off. Fig. 6 is a diagram illustrating mainly an exemplary configuration of the power supply system of the control unit CU1.

A backflow prevention diode 130a is connected to the output stage of the conversion unit 100a. A backflow prevention diode 130b is connected to the output stage of the conversion unit 100b. A backflow prevention diode 130c is connected to the output stage of the conversion unit 100c. The conversion unit 100a, conversion unit 100b, and conversion unit 100c are OR connected by the diode 130a, diode 130b, and diode 130c in parallel.

The outputs from the conversion unit 100a, conversion unit 100b, and conversion unit 100c are combined and supplied to the battery unit BU1. Actually, the output having the highest voltage among the outputs from the conversion unit 100a, conversion unit 100b, and conversion unit 100c is supplied to the battery unit BU1. Note that the outputs from the plurality of conversion units 100 may be supplied in accordance with the power consumption in the battery unit BU1.

A main switch SW1 that can be operated by a user is provided at the control unit CU1. When the main switch SW1 is turned on, the power is supplied to the CPU 110, thereby starting the control unit CU1. The main switch SW1 may be operated by remote control such as on-off switching operation by a remote control device.

For example, the power from a battery 133 incorporated inside the control unit CU1 is supplied to the CPU 110. The battery 133 is, for example, a lithium ion secondary battery. The direct current voltage supplied from the battery 133 is converted to voltage corresponding to the CPU 110 by a DC-DC converter 134. The converted voltage is supplied to the CPU 110 as power supply voltage. The battery 133 is used at the time of starting the control unit CU1. The battery 133 is controlled, for example, by the CPU 110 (e.g., for charging and discharging).

The battery 133 can be charged based on the voltage supplied from the battery unit BU1, for example. The battery 133 may also be charged based on the voltage supplied from the conversion unit 100a, the conversion unit 100b, and so on.

For instance, the voltage V11 supplied from the battery unit BU1a is supplied to a charging control unit 135. The charging control unit 135 converts the voltage V11 to appropriate voltage, and charges the battery 133 based on the converted voltage. Charging by the charging control unit 135 is executed based on CVCC (Constant Voltage Constant Current) mode.

Meanwhile, the CPU 110 may be configured to operate based on the voltage V11 supplied from the battery unit BU1 or the voltage supplied from the conversion unit 100a, the conversion unit 100b, and so on. The voltage V11 supplied from the battery unit BU1 is converted to voltage having a predetermined level by a DC-DC converter 136. The converted voltage is supplied to the CPU 110 as the power supply voltage, thereby operating the CPU 110.

After the control unit CU1 is started, the CPU 110 turns on at least one conversion unit out of the conversion unit 100a, conversion unit 100b, and conversion unit 100c, and at least one voltage of the voltage V3, voltage V4, and voltage V5 is received at the conversion unit corresponding to the control unit CU1, and the voltage V10 is output from the conversion unit. The voltage V10 is supplied to the battery unit BU1 via the power line L10.

The CPU 110 communicates with the battery unit BU1 by using the signal line SL. By this communication, the CPU 110 outputs a control command that provides an instruction to start the battery unit BU1 to execute discharging. The CPU 110 turns on a switch SW2. The switch SW2 is formed of, for example, an FET (Field Effect Transistor). The switch SW2 may also be formed of an IGBT (Insulated Gate Bipolar Transistor). When the switch SW2 is turned on, the voltage V11 is supplied to the control unit CU1 from the predetermined battery unit BU1.

When the voltage V11 supplied from the battery unit BU1 is supplied to an external device, the CPU 110 turns on a switch SW3. When the switch SW3 is turned on, voltage V12 based on the voltage V11 is supplied to the external device via a power line L12. The voltage V12 may be the voltage V11 itself, or may be obtained by converting the voltage V11 so as to accept the external device. The power line L12 is connected to various kinds of external devices which are loads. Meanwhile, power based on the voltage V12 is supplied to a battery unit BU1 different from the battery unit BU1 that is discharging so as to charge the battery unit BU1 to which the power is supplied.

A backflow prevention diode 130d is connected to an output side (cathode side) of the switch SW2. By connecting the diode 130d, non-stabilized power supplied from the solar power generator 3 and the wind force power generator 4 can be prevented from being supplied to the external device which is the load. The power supplied from the battery unit BU1 can be stably supplied to the external device. Of course, a diode may be provided at a final stage of the battery unit BU1 for safety.

An exemplary configuration of the control unit CU1 in the block BL1 has been described above. Note that configurations of the control units (e.g., control unit CU2 and control unit CU3) in other blocks BL have the configuration same as the control unit CU1, for example, and also operate same as the control unit CU1.

Meanwhile, an example of determining which output voltage is to be prioritized among the output voltage from the conversion unit 100a, output voltage from the conversion unit 100b, and output voltage from the conversion unit 100c by suitably adjusting the resistance value of the variable resistor has been described, but the voltage to be prioritized may be determined by other methods, too. For instance, the output voltage to be preferentially supplied may be determined by adjusting the resistance values of the resistance Rc1, resistance Rc2, and resistance Rc3 in each of the conversion units 100.

The output voltage of the conversion unit may be changed as well. For instance, it is assumed that power supplied from the solar power generator 3 is preferentially used. In this case, the range from 45 V to 48 V of the output voltage of the conversion unit 100a is changed to a slightly higher range. The range can be changed by suitably setting the resistance values of the resistance Rc1, resistance Rc2, and resistance Rc3 as described above. This enables the output of the conversion unit 100a to be supplied to the battery unit BU more preferentially than other conversion units (conversion unit 100b and conversion unit 100c).

The range of the output voltage is exemplified as follows.
(1) Both the upper limit (48 V) and the lower limit (45 V) are increased (e.g., range from 45.5 V to 48.5V).
(2) Only the lower limit is increased (e.g., range from 45.5 V to 48V).
(3) Only the upper limit is increased (e.g., range from 45 V to 48.5 V).

In the case of the exemplary setting (1), the output of the conversion unit 100a can be constantly prioritized. In the case of the exemplary setting (2), the output of the conversion unit 100a can be prioritized when the value of the voltage V3 is small (e.g., approximately from 75 V to 80 V), for example. The output of the conversion unit 100a is treated equal to the outputs of other conversion units (conversion unit 100b and conversion unit 100c) when the value of the voltage V3 is large. In the case of the exemplary setting (3), the output of the conversion unit 100a can be prioritized when the value of the voltage V3 is large (e.g., approximately 100 V). In the case where the value of the voltage V3 is small (e.g., approximately from 75 V to 80 V), the output of the conversion unit 100a is treated equal to the outputs of other conversion units (conversion unit 100b and conversion unit 100c). Thus, the output voltage from a predetermined conversion unit can be preferentially supplied to the battery unit. In the same manner, the outputs from the conversion unit 100b and conversion unit 100c can be preferentially supplied to the battery unit BU.

### [1-4. Configuration of Battery Unit]

Next, the battery unit BU connected to the control unit CU will be described. In the following, description will be described by exemplifying the battery unit BU1a connected to the control unit CU1.

Fig. 7 is a diagram illustrating an exemplary configuration of the battery unit BU1a. The battery unit BU1a is configured to include a charging control unit 140, a discharging control unit 141, and a battery Ba. The voltage V10 is supplied from the control unit CU1 to the charging control unit 140. The voltage V11 which is output from the battery unit BU1a is supplied to the control unit CU1 via the discharging control unit 141. A power line L14 different from the power line L11 is provided in the battery unit BU1a. The voltage V11 is directly supplied from the discharging control unit 141 to the external device via the power line L14. The power line L14 may be omitted.

The battery Ba as the example of the power storage unit is a chargeable battery such as the lithium ion secondary battery, for example. The charging control unit 140 and the discharging control unit 141 have the configurations corresponding to the kinds of the battery Ba.

The charging control unit 140 includes a DC-DC converter 142a. The voltage V10 to be input to the charging control unit 140 is converted to predetermined voltage by the DC-DC converter 142a. The voltage output from the DC-DC converter 142a is supplied to the battery Ba, and the battery Ba is charged. The predetermined voltage value is varied by the kinds of the battery Ba. A voltage sensor 142b, an electronic switch 142c, and a current sensor 142d are connected to an input stage of the DC-DC converter 142a. A current sensor 142e, an electronic switch 142f, and a voltage sensor 142g are connected to an output stage of the DC-DC converter 142a.

The discharging control unit 141 includes a DC-DC converter 143a. The DC-DC converter 143a generates the voltage V11 based on direct-current voltage supplied from the battery Ba to the discharging control unit 141. The voltage V11 is output from the discharging control unit 141. A voltage sensor 143b, an electronic switch 143c, and a current sensor 143d are connected to the input stage of the DC-DC converter 143a. A current sensor 143e, an electronic switch 143f, and a voltage sensor 143g are connected to the output stage of the DC-DC converter 143a.

The battery unit BU1a includes a CPU 145. The CPU 145 control respective sections of the battery unit BU1a. For example, on-off operation of the electronic switches in the charging control unit 140 and the discharging control unit 141 is controlled. The CPU 145 may be configured to execute safety ensuring processing such as overcharge preventing function and overcurrent preventing function. The CPU 145 communicates with the CPU 110 of the control unit CU1 via the signal line SL to transmit and receive control commands and data.

A memory 146, an A/D convertion unit 147, and a temperature sensor 148 are connected to the CPU 145 via a bus 149. The bus 149 is formed of, for example, an I²C bus.

The memory 146 is a general term that represents a ROM where programs executed by the CPU 145 are stored, a RAM used as a work memory when the CPU 145 executes processing, a non-volatile memory, such as an EEPROM, where various kinds of data, and so on.

The analog-data sensor information is supplied from, for example, the voltage sensor and current sensor to the A/D convertion unit 147. The A/D convertion unit 147 converts the analog-data sensor information to digital-data sensor information. The digital-data sensor information is supplied to the CPU 145.

The temperature sensor 148 measures the ambient temperature. For instance, the temperature inside the battery unit BU1a and the ambient temperature of the battery unit BU1a are measured. The temperature information obtained by the temperature sensor 148 is converted to the digital data by the A/D convertion unit 147, and then supplied to the CPU 145.

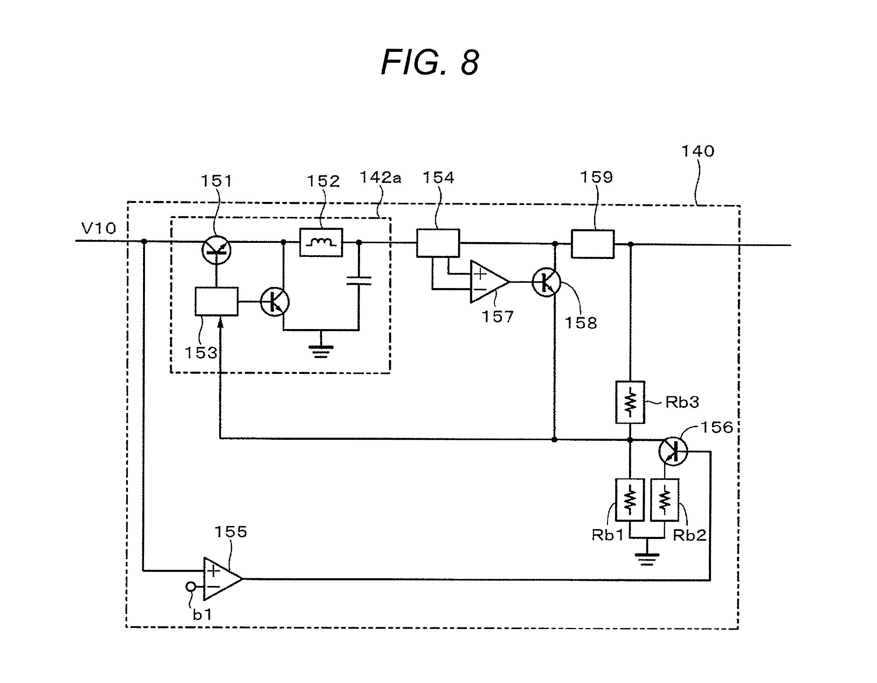

Fig. 8 is a diagram illustrating an exemplary configuration of the charging control unit 140 in the battery unit BU1a. As illustrated in Fig. 8, the charging control unit 140 includes a DC-DC converter 142a and a feedforward control system and a feedback control system later described. Note that, in Fig. 8, the voltage sensor 142b, electronic switch 142c, current sensor 142d, current sensor 142e, electronic switch 142f, and voltage sensor 142g are not illustrated.

The DC-DC converter 142a is formed of, for example, a transistor 151, a coil 152, control IC (Integrated Circuit) 153, and so on. The transistor 151 is controlled by the control IC 153.

The feedforward control system includes an operational amplifier 155, a transistor 156, a resistance Rb1, a resistance Rb2, and a resistance Rb3. An output from the feedforward control system is received at, for example, a control terminal provided at the control IC 153 in the DC-DC converter 142a. The control IC 153 in the DC-DC converter 142a adjusts output voltage from the charging control unit 140 such that input voltage to the control terminal becomes constant.

In other words, the feedforward control system included in the charging control unit 140 acts same as the feedforward control system included in the conversion unit 100a.

The charging control unit 140 includes the feedforward control system, thereby adjusting a value of the output voltage from the charging control unit 140 so as to be a voltage value within a preset range. The value of the output voltage from the charging control unit 140 is adjusted to the voltage value within the preset range, thereby adjusting charging current to each of the batteries B electrically connected to the control unit CU1 in accordance with change of input voltage (voltage V10) from the conversion unit 100a. Therefore, the battery unit BU1a including the charging control unit 140 has a function as a battery charger that changes a charging rate toward the battery Ba.

By changing the charging rate toward each of the batteries B electrically connected to the control unit CU1, the value of the input voltage to the charging control unit 140 of each of the battery units BU1 (may be referred to as the value of the output value from at least one of the conversion unit 100a, conversion unit 100b, and conversion unit 100c) is adjusted to the voltage value within the preset range.

As illustrated in Fig. 8, the output voltage is taken out from the charging control unit 140 via the DC-DC converter 142a, a current sensor 154, and a filter 159. The output voltage is supplied to the battery Ba.

As described later, the value of the output voltage from the charging control unit 140 is adjusted to be the voltage value within the preset range in accordance with the kinds of battery connected to the charging control unit 140. The range of the output voltage from the charging control unit 140 is adjusted by suitably selecting the resistance values of the resistance Rb1, resistance Rb2, and resistance Rb3.

Thus, since the range of the output voltage from the charging control unit 140 is individually determined in accordance with the kinds of the battery B connected to the charging control unit 140, the kinds of the battery B included in the battery unit BU1 are not limited. The reason is that it is only to suitably select the resistance values of the resistance Rb1, resistance Rb2, and resistance Rb3 inside the charging control unit 140 in accordance with the kinds of the battery B to be connected.

Meanwhile, in Fig. 8, the configuration in which the output of the feedforward control system is received at the control terminal of the control IC 153 is exemplified, but the CPU 145 of the battery unit BU1 may be configured to give the input to the control terminal of the control IC 153. For example, the CPU 145 of the battery unit BU1 may be configured to receive information related to the input voltage toward the battery unit BU1 from the CPU 110 of the control unit CU1 via the signal line SL. The CPU 110 of the control unit CU1 can receive the information related to the input voltage toward the battery unit BU1 based on measurement results by the voltage sensor 101g, voltage sensor 102g, and voltage sensor 103g.

In the following, the feedforward control system provided in the charging control unit 140 will be described.

An input to a non-inverted input terminal of an operational amplifier 155 has voltage obtained by multiplying the input voltage (voltage V10) to the charging control unit 140 by kb (kb: approximately a few tenths to a few hundredth). On the other hand, an input to an inverted output terminal b1 of the operational amplifier 155 has voltage obtained by multiplying voltage Vb by kb. The voltage Vb is intended to be set as a lower limit of output voltage of the conversion unit 100a, conversion unit 100b, and conversion unit 100c. The input voltage (kb × Vb) toward the inverted output terminal b1 of the operational amplifier 155 is applied from the CPU 145, for example.

Therefore, in the case where the input voltage toward the charging control unit 140 is sufficiently higher than the preset constant voltage Vb, the feedforward control system included in the charging control unit 140 boosts the output voltage from the charging control unit 140. Further, when the input voltage toward the charging control unit 140 becomes close to the preset constant voltage Vb, the feedforward control system steps down the output voltage from the charging control unit 140.

The transistor 156 is disposed such that a value of the output voltage from the charging control unit 140 does not exceed the preset upper limit when the input voltage toward the charging control unit 140 exceeds a predetermined value in the same manner as the transistor 125 illustrated in Fig. 5. Note that the range of the value of the output voltage from the charging control unit 140 is determined by combination of the resistance values of the resistance Rb1, resistance Rb2, and resistance Rb3. Accordingly, the resistance values of the resistance Rb1, resistance Rb2, and resistance Rb3 are adjusted in accordance with the kinds of the battery B connected to the charging control unit 140.

As described above, the charging control unit 140 further includes the feedback control system. The feedback control system is formed of, for example, the current sensor 154, an operational amplifier 157, and a transistor 158, and so on.

When an amount of current supplied to the battery Ba exceeds a preset specified value, the output voltage from the charging control unit 140 is stepped down by the feedback control system, and the amount of current supplied to the battery Ba is restricted. A restriction level for the amount of current supplied to the battery Ba by the feedback control system is determined by rating of the battery Ba connected to the charging control unit 140.

When the output voltage from charging control unit 140 is stepped down by the feedforward control system or the feedback control system, the amount of current supplied to the battery Ba is restricted. As a result of restricting the amount of current supplied to the battery Ba, charging the battery Ba connected to the charging control unit 140 is slowed down.

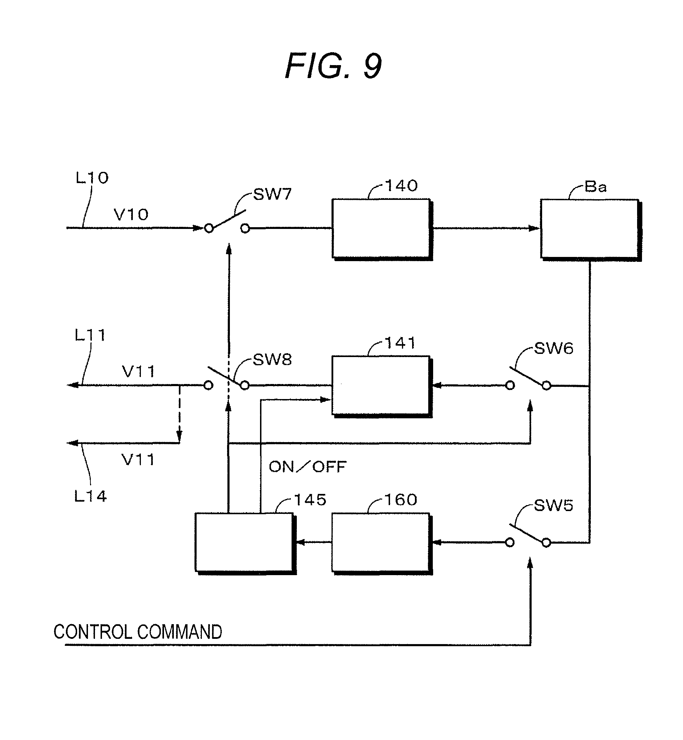

Fig. 9 is a diagram mainly illustrating an exemplary configuration related to the power supply system of the battery unit BU1a. The battery unit BU1a is not provided with a main switch. A switch SW5 and a DC-DC converter 160 are connected between the battery Ba and the CPU 145. A switch SW6 is connected between the battery Ba and the discharging control unit 141. A switch SW7 is connected to the input stage of the charging control unit 140. A switch SW8 is connected to the output stage of the discharging control unit 141. The respective switches SW are formed of, for example, FET.

The battery unit BU1a is started by, for example, a control command from the control unit CU1. For example, a high-level signal is constantly supplied from the control unit CU1 via a predetermined signal line. For this reason, the high-level signal is supplied to the switch SW5 only by connecting a port of the battery unit BU1a to the predetermined signal line, thereby turning on the switch SW5. The battery unit BU1a is started by turning on the switch SW5. The voltage from the battery Ba is supplied to a DC-DC converter 160 by turning on the switch SW5. The power-supply voltage based on the voltage from the battery Ba is generated by the DC-DC converter 160. The power-supply voltage is supplied to the CPU 145 to actuate the CPU 145.

The CPU 145 executes processing in accordance with the control command of the control unit CU1. For example, the control command providing a charging instruction is supplied to the CPU 145 from control unit CU1. In accordance with the command providing the charging instruction, the CPU 145 turns off the switch SW6 and the switch SW8, and then turns on the switch SW7. The voltage V10 supplied from the control unit CU1 is supplied to the charging control unit 140 by turning on the switch SW7. The voltage V10 is converted to a predetermined value by the charging control unit 140, and the battery Ba is charged with the converted voltage. Note that charging method to the battery Ba may be suitably changed in accordance with the kinds of the battery Ba.

The control command providing a discharging instruction, for example, is supplied to the CPU 145 from control unit CU1. In accordance with the control command providing the discharging instruction, the CPU 145 turns off the switch SW7 and turns on the switch SW6 and switch SW8. For example, the switch SW8 is turned on after a predetermined passed from the switch SW6 is turned on. The voltage is supplied from the battery Ba to the discharging control unit 141 by turning on the switch SW6. The voltage supplied from the battery Ba is converted to the voltage V11 by the discharging control unit 141. The converted voltage V11 is supplied to the control unit CU1 via the switch SW8. Meanwhile, a diode may be added to a latter stage of the switch SW8 so as to avoid collision with outputs from other battery units BU1.

Meanwhile, the discharging control unit 141 can be turned on/off by the control of the CPU 145. A control command for turning on/off the discharging control unit is supplied to the discharging control unit 141 via an on-off signal line directed to the discharging control unit 141 from the CPU 145. In accordance with the control command, at least one of the electronic switch 143c and the electronic switch 143f of the discharging control unit 141 is turned on/off.

An exemplary configuration of the battery unit BU has been described by exemplifying the battery unit BU1a. Note that the battery unit BUlb and battery unit BU1c have the configuration same as the battery unit BU1a, for example, and operates same as the battery unit BU1a. There may be constitutional difference between the respective battery units BU. For instance, the battery B included in the battery unit BUlb may be a secondary battery other than the lithium ion battery.

The battery units of other blocks (e.g., battery unit BU2a and battery unit BU3a) have the configuration same as the battery unit BU1a, for example, and operate same as the battery unit BU1a.

### [1-5. Outline of Operation]

Next, an exemplary operation in the block BL1 will be described. The block BL2 and block BL3 operate same as the block BL1, for example. A description related to the operation of the block BL2 and block BL3 will be omitted accordingly.

The voltage V3, voltage V4, and voltage V5 are supplied to the control unit CU1 in the block BL1. The voltage V3 is received by the conversion unit 100a. The voltage V4 is received by the conversion unit 100b. The voltage V5 is received by the conversion unit 100c. The voltage V10 fluctuating in the range, for example, from 45 to 48 V is generated by each of the conversion units 100.

Here, note that outputs of the solar power generator 3 and the wind force power generator 4 fluctuate depending on the weather. For instance, it is effective to utilize the output of the solar power generator 3 during a daytime time zone under fine weather, and utilize the output of the wind force power generator 4 during the night-time or when a typhoon is approaching. In other words, preferably, the voltage V10 are generated by the three conversion units 100 (conversion unit 100a, conversion unit 100b, and conversion unit 100c), and the predetermined voltage V10 to be supplied to the battery unit BU1 side is selected from among the voltage V10 generated by the conversion units to suit the weather and the like. Otherwise, it is preferably to turn on only the conversion unit whose output is to be used.

As described above as an example, one of the voltage V10 generated by the three conversion units 100 can be selected by suitably adjusting the resistance values of the variable resistors (variable resistor 101h, variable resistor 102h, and variable resistor 103h). In the following, description will be given for a case in which the voltage V10 generated by the conversion units 100a is selected, and the voltage V10 generated by the conversion unit 100a is supplied to the battery unit BU1.

In the case where the voltage V3 supplied from the solar power generator 3 is sufficiently high (e.g., approximately 100 V), the voltage V10 generated by the conversion unit 100a becomes approximately 48 V. At this point, when illuminance to the solar cell of the solar power generator 3 is reduced and the voltage V3 is decreased, the voltage V10 is decreased. With the decrease of the voltage V10, control to restrict charging is executed in the charging control unit 140 of the battery unit BU1 being charged (any one of the battery unit BU1a, battery unit BU1b, battery unit BU1c). In other words, the load is reduced from the standpoint of the solar cell of the solar power generator 3.

With the reduction of the load from the standpoint of the solar cell of the solar power generator 3, the voltage V3 which is terminal voltage of the solar cell is increased (recovered). The voltage V10 is increased due to the increase of the voltage V3. The charging control unit 140 of the battery unit BU1 being charged boosts the output voltage to increase the charging rate. After that, cooperative control by the conversion unit 100a of the control unit CU1 and the battery unit BU1 is repeated until the voltage V10 reaches a specific convergence value and balance between demand and supply of the power is achieved. In the following description, the cooperative control by the conversion unit of the control unit CU and the battery unit BU connected to the conversion unit may be referred to as cooperative control.

Note that decrease of the terminal voltage of the solar cell is not caused only by reduced illuminance to the solar cell. For example, in the case where the number of the battery units BU1 to be charged is increased, the load is increased from the standpoint of the solar cell in the solar power generator 3, thereby decreasing the voltage V10. In this case also, control to restrict charging is executed in battery unit BU1, and the cooperative control by the conversion unit 100a of the control unit CU1 and the battery unit BU1 is repeated. Thus, even in the case where the power to be supplied fluctuates, the battery unit autonomously controls charging in accordance with the fluctuations.

In the case where the power supplied from the wind force power generator 4 is used, the same control is executed. In other words, in the case where the voltage V10 output from the conversion unit 100b is supplied to the battery unit BU1, the cooperative control by the conversion unit 100b of the control unit CU1 and the battery unit BU1 is executed in the same manner.

In the case where the power supplied from the biomass power generator 5 is used, the same control is also executed. In other words, in the case where the voltage V10 output from the conversion unit 100c is supplied to the battery unit BU1, the cooperative control by the conversion unit 100c of the control unit CU1 and the battery unit BU1 is executed in the same manner. The output from the biomass power generator 5 fluctuates less than the outputs from the solar power generator 3 and the wind force power generator 4. However, in the case where the output of the biomass power generator 5 is used, the voltage V10 from the conversion unit 100c is decreased when the number of the battery units BU1 to be charged is increased. In this case also, the battery unit BU1 controls charging in accordance with the output of the biomass power generator 5, thereby achieving the balance between demand and supply of the power.

The cooperative control by the control unit CU and the battery unit BU is executed in other blocks (block BL2 and block BL3) in the same manner. The balance between demand and supply of the power in the entire system 1 is achieved by the cooperative control executed in the respective blocks BL.

Meanwhile, as one of characteristics of the wind force power generator 4, a motor section includes a large L (reactance) component and has a heavy load, and therefore, there is a characteristic of discharging a certain amount of power even in the case where rotary speed of the motor section is reduced. However, when the heavy load state continues, there may be a case in which the windmill of the wind force power generator 4 is finally stopped and the output of the wind force power generator 4 is stopped. Therefore, it is desirable to keep the rotary speed of the motor section at a predetermined level or higher than that to cope with the load fluctuation.

In the above-described example, the conversion unit 100b adjusts the value of the voltage V10 which is the output voltage within the range from 45 V to 48 V in accordance with the voltage V4 which is the input voltage, but instead of that, the value of the voltage V10 may be adjusted in accordance with the voltage corresponding to the predetermined rotary speed of the motor section (conveniently referred to as voltage V50), for example. Generally, it is considered that a power generation amount of the wind force power generator is proportional to the rotary speed of the motor section. Therefore, the voltage V50 corresponding to the predetermined rotary speed can be set. The voltage V50 may be input to the inverted output terminal c1 of the operational amplifier 124 instead of a reference voltage (75 V) above described.

With this configuration, when the voltage V4 becomes close to the voltage V50, the above-described cooperative control works and reduces the charging rate toward the battery unit BU, for example. Then, the load is reduced and the voltage V4 can be prevented from becoming lower than voltage V50. In other words, the rotary speed of the motor section in the wind force power generator 4 can be prevented from falling below the predetermined rotary speed.

### [1-6. Detailed Description for Operation]

The cooperative control in the case of using outputs from the solar power generator 3 will be described in detail.

### [1-6-1. MPPT Control]

First, an outline of MPPT (Maximum Power Point Tracking) control will be described below.

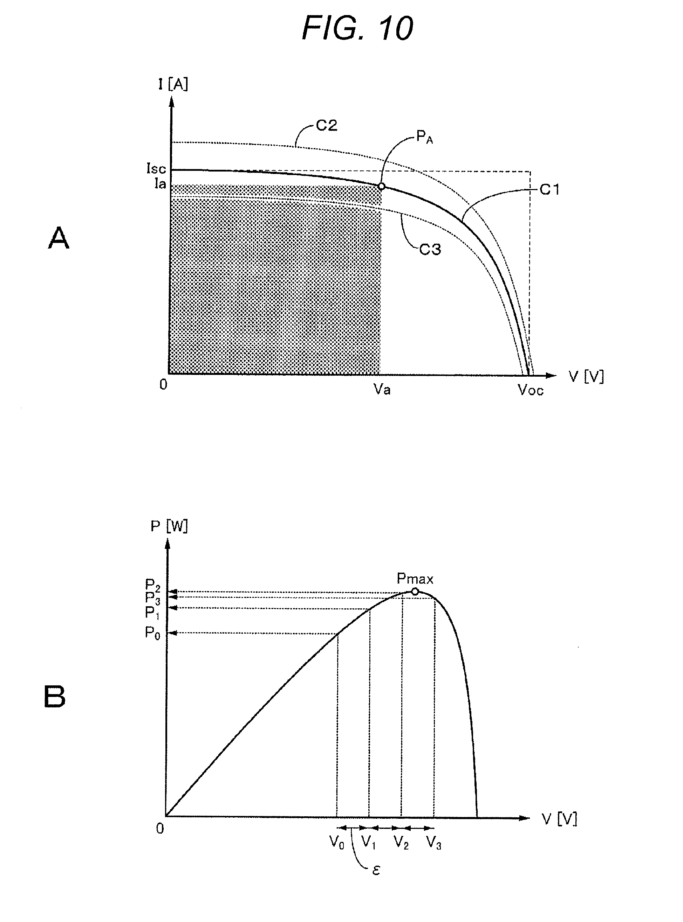

Fig. 10A is a graph illustrating voltage-current characteristics of the solar cell. In Fig. 10A, the vertical axis represents terminal current of the solar cell and the horizontal axis represents the terminal voltage of the solar cell. In Fig. 10A, Isc indicates output current when terminals of the solar cell are short-circuited during exposure to light, and Voc indicates output voltage when the terminals of the solar cells are opened during exposure to light. The Isc and Voc are referred to short-circuit current and open voltage respectively.

As illustrated in Fig. 10A, the terminal current of the solar cell is maximum when the terminals of the solar cell are short-circuited during exposure to light, and at this point, the terminal voltage of the solar cell is substantially zero V. On the other hand, the terminal voltage of the solar cell is maximum when the terminals of the solar cells are opened during exposure to light, and at this point the terminal current of the solar cell is substantially zero A (ampere).

Now, it is assumed that the graph illustrating the voltage-current characteristics of the solar cell is indicated by a curve C1 illustrated in Fig. 10A. Here, when a load is connected to the solar cell, the voltage and current taken out from the solar cell is determined by power consumption required by the load connected. A point on the curve C1 represented by a pair of the terminal voltage and terminal current of the solar cell at this point is referred to as an operating point of the solar cell. Note that, in Fig. 10A, a position of the operating point is schematically illustrated, and a position of an actual operating point is not illustrated. The same is applied to the operating points illustrated in other drawings of the present disclosure.

By changing the operating point on the curve indicating the voltage-current characteristics of the solar cell, the product of the terminal voltage and the terminal current, namely, a pair of terminal voltage Va and terminal current Ia that provides a maximum generated power can be found. A point represented by the pair of terminal voltage Va and terminal current Ia that provides the maximum power obtained by the solar cell is referred to as an optimum operating point of the solar cell. Note that the optimum operating point may also be referred to as a maximum power point, a maximum operating point, and the like.

When the graph representing the voltage-current characteristics of the solar cell is indicated by the curve C1 illustrated in Fig. 10A, the maximum power obtained from the solar cell can be obtained by the product of VA and Ia providing the optimum operating point. In other words, when the graph representing the voltage-current characteristics of the solar cell is indicated by the curve C1 illustrated in Fig. 10A, the maximum power obtained from the solar cell is illustrated by an area (Va × Ia) indicated by a shaded region in Fig. 10A. Meanwhile, an amount obtained by dividing the (Va × Ia) by (Voc × Isc) is a fill factor.

The optimum operating point is changed by the power required by the load connected to the solar cell, and point P_{A} indicating the optimum operating point moves on the curve C1 in accordance with the change of the power required by the load connected to the solar cell. In the case where the amount of the power required by the load is little, the current to be supplied to the load may be covered by the current less than the terminal current at the optimum operating point. Therefore, the value of the terminal voltage of the solar cell becomes higher than the voltage value at the optimum operating point. On the other hand, in the case where the amount of required power is larger than the amount of power that can be supplied at the optimum operating point, the power amount exceeds the power that can be provided by illuminance at this point. Accordingly, it can be considered that the terminal voltage of the solar cell is to be decreased up to zero.

The curves C2 and C3 illustrated in Fig. 10A indicate the voltage-current characteristics of the solar cell in the case where illuminance to the solar cell is changed, for example. For instance, the curve C2 illustrated in Fig. 10A corresponds to the voltage-current characteristics in the case where illuminance to the solar cell is increased, and the curve C3 illustrated in Fig. 10A corresponds to the voltage-current characteristic in the case where illuminance to the solar cell is decreased.

For instance, when the illuminance to the solar cell is increased and the curve indicating the voltage-current characteristics of the solar cell is changed from the curve C1 to the curve C2, the optimum operating point is also changed along with the increase of illuminance to the solar cell. Note that the optimum operating point moves from the point on the curve C1 to the point on the curve C2 at this point.

The MPPT control is nothing less than the control to obtain the optimum operating point relative to the change of the curve indicating the voltage-current characteristics of the solar cell and control the terminal voltage (or terminal current) of the solar cell such that the power obtained from the solar cell becomes maximum.

Fig. 10B is a graph (P-V curve) illustrating a relation between the terminal voltage of the solar cell and generated power of the solar cell in the case where the voltage-current characteristics of the solar cell is indicated by a specific curve.

As illustrated in Fig. 10B, in the case where the generated output of the solar cell takes a maximum value Pmax at the terminal voltage providing the optimum operating point, the terminal voltage providing the optimum operating point can be acquired by a hill climbing method. A series of steps described below is generally executed by a CPU of a power conditioner connected between the solar cell and the power system.

For instance, first, generated power P₀ at the time of receiving from the solar cell is calculated, defining an initial value of the voltage at this point as V₀. Next, the voltage received from the solar cell is increased by an amount ε, as expressed as follows: V₁ = V₀ + ε (here, ε > 0). Next, generated power P₁ at the time of receiving from the solar cell is calculated, defining the voltage at this point as V₁. Then, the obtained P₀ and P₁ are compared, and in the case of P₁ > P₀, the voltage received from the solar cell is increased by the amount ε as expressed in V₂ = V₁ + ε. Next, generated power P₂ at the time of receiving from the solar cell is calculated, defining the voltage at this point as voltage V₂. Then, the obtained P₁ and P₂ are compared, and in the case of P₂ > P₁, the voltage received from the solar cell is increased by the amount ε as expressed in V₃ = V₂ + ε. Next, generated power P₃ at the time of receiving from the solar cell is calculated, defining the voltage at this point as V₃.

Here, in the case of P₃ < P₂, the terminal voltage providing the optimum operating point is located between V₂ and V₃. Thus, the terminal voltage providing the optimum operating point can be acquired with arbitrary accuracy by making adjustment with the amount ε. The bisection method algorithm may also be applied in the above-described steps. Meanwhile, some change is required in the control program because the simple hill climbing method cannot handle the case in which the P-V curve includes two or more peaks, such as when an irradiation surface of the solar cell is partially shadowed.

According to the MPPT control, the maximum power can be taken out from the solar cell in the respective weather conditions because the terminal voltage is adjusted such that the load becomes constantly optimum from the standpoint of the solar cell. On the other hand, it takes some time to execute the control because analog-digital conversion (A/D conversion) is required to calculate the terminal voltage providing the optimum operating point and further multiplication is included in this calculation. Therefore, the MPPT control sometimes cannot handle a rapid change of illuminance to the solar cell, such as when the sky is suddenly overcast and illuminance to the solar cell is rapidly changed.

### [1-6-2. Control by Voltage Tacking Method]

Here, comparing the curves C1 to C3 illustrated in Fig. 10A, the change of the open voltage Voc is smaller than the change of the short-circuit current Isc relative to the change of illuminance to the solar cell (may also be referred to as change of the curve indicating the voltage-current characteristics). Further, it is known that any solar cell indicates similar voltage-current characteristics and in the case of a crystal silicon solar cell, the terminal voltage providing the optimum operating point is around approximately 70% to 80% of the open voltage. Therefore, it can be expected that the power can be efficiently taken out from the solar cell by setting an appropriate voltage value as the terminal voltage of the solar cell and adjusting the output current of the converter such that the terminal voltage of the solar cell becomes the set voltage value. The above-described control by current restriction is referred to as a voltage tacking method.

In the following, an outline of control according to the voltage tacking method will be described. As a premise, a switching device is disposed between the solar cell and the power conditioner, and a voltage measuring unit is disposed between the solar cell and the switching device. Further, the solar cell is in a state of being exposed to the light.

First, the switching device is turned off, and when a predetermined period has passed after the switching device is turned on, the terminal voltage of the solar cell is measured by the voltage measuring unit. The reason for waiting until the predetermined period has passed after the switching device is turned off before measuring the terminal voltage of the solar cell is to wait for the terminal voltage of the solar cell to be stabilized. The terminal voltage at this point is the open voltage Voc.

Next, for example, 80% of the voltage value of the open voltage Voc obtained by measurement is calculated as a target voltage value, and the target voltage value is temporarily held inside a memory and the like. Then, the switching device is turned on, and energization to the converter inside the power conditioner is started. At this point, the output current of the converter is adjusted such that the terminal voltage of the solar cell becomes the target voltage value. The above-described steps are executed at optional time intervals.

The control according to the Voltage tracking method has a larger loss of the power obtained by the solar cell, compared to the MPPT Control Method, but can be implemented by a simple circuit at low cost, thereby achieving to reduce the cost for the power conditioner including the converter.

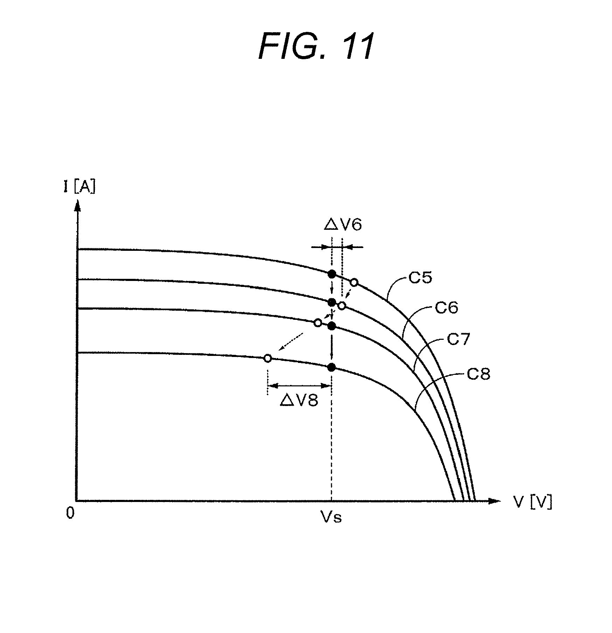

Fig. 11 is an explanatory diagram for the changes of the operating point relative to the changes of the curves indicating the voltage-current characteristics of the solar cell. In Fig. 11, the vertical axis represents the terminal current of the solar cell, and the horizontal axis represents the terminal voltage of the solar cell. Further, a white circle in Fig. 11 indicates the operating point at the time of executing the MPPT control, and a black circle in Fig. 11 indicates the operating point at the time of executing the voltage tracking method.

Now, it is assumed that the curve indicating the voltage-current characteristics of the solar cell is a curve C5. Next, in the case where the curve indicating the voltage-current characteristics of the solar cell is changed from the curve C5 to a curve C8 along with change of illuminance to the solar cell, the operating points of the respective control methods are also changed along with the change of the curve indicating the voltage-current characteristics of the solar cell. Note that the target voltage value at the time of executing the voltage tacking method is regarded to be a substantially constant value Vs in Fig. 11 because the change of the open voltage Voc relative to the change of illuminance to the solar cell is small.

As is obvious from Fig. 11, in the case where the curve indicating the voltage-current characteristics of the solar cell is a curve C6, a divergence degree between the operating point of the MPPT control and the operating point of the voltage tacking method is small. Therefore, in the case where the curve indicating the voltage-current characteristics of the solar cell is the curve C6, it can be considered that there is no significant difference in the generated power obtained from the solar cell in either case of control.

On the other hand, in the case where the curve indicating the voltage-current characteristics of the solar cell is a curve C8, the divergence degree between the operating point of the MPPT control and the operating point of the voltage tacking method is large. For example, as illustrated in Fig. 11, comparing a difference ΔV6 with a difference ΔV8 between the terminal voltage at the time of applying the MPPT control and the terminal voltage at the time of applying the voltage tacking method, ΔV6 is smaller than ΔV8. Accordingly, in the case where the curve indicating the voltage-current characteristics of the solar cell is a curve C8, the difference between the generated power obtained from the solar cell at the time of applying the MPPT control and the generated power obtained from the solar cell at the time of applying the voltage tacking method is large.

### [1-6-3. Cooperative Control by Control Unit and Battery Unit]

Next, the cooperative control by the control unit and the battery unit will be described.

Generally, in the case of charging one battery with the power obtained from the solar cell, control according to the above-described MPPT control or voltage tacking method is executed by the power conditioner interposed between the solar cell and the battery. The above battery may include a battery that operates integrally with a plurality of batteries incorporated inside thereof, but the battery is generally formed of a single kind of the plurality of batteries. In other words, the above-described MPPT control or voltage tacking method control is assumed to be executed singularly by the power conditioner connected between the solar cell and one battery. Further, no change is made in the number and configuration (connection mode such as serial connection and parallel connection) of the batteries to be charged while charging, and the number and configuration of the batteries to be charged is fixed during charging.

On the other hand, in the cooperative control, each of the control unit CU1, plurality of battery unit BU1a, battery unit BU1b, battery unit BU1c, etc. autonomously executes control such that balance between the output voltage of the control unit CU1 and the voltage required by the plural number of the battery units BU1 is achieved. As described above, the battery B included in the battery unit BU1a, battery unit BU1b, battery unit BU1c, etc. may be any kind. In other words, the control unit CU according to the present disclosure can execute the cooperative control for the plural kinds of the batteries B.

Further, the respective battery units BU1 are detachably attached to the control unit CU1 in the system 1. In other words, while power is generated from the solar cell of the solar power generator 3, there is possibility that the number of the battery units BU1 connected to the control unit CU1 is changed and the number of the battery units BU1 to be charged is changed.

The load from the standpoint of the solar cell may be changed while the power is generated from the solar cell, but according to the cooperative control, it is possible to handle not only the change of the illuminance to the solar cell but also the load change from the standpoint of the solar cell while the power is generated from the solar cell. Further, the cooperative control is executed in each of the plurality of blocks BL, and the balance between demand and supply of power can be achieved in the entire system 1.

By connecting the above-described control unit CU1 to the battery unit BU1, the control system that dynamically changes the charging rate in accordance with supply capacity from the control unit CU1 can be established. In the following, an exemplary cooperative control will be described. Meanwhile, the following description will be given under the presumption that one battery unit BU1a is connected to the control unit CU1 in an initial state, but control is the same in the case where the plurality of battery units BU1 is connected to the control unit CU1.

For example, the solar cell is connected to the input side of the control unit CU1 and the battery unit BU1a is connected to the output side thereof. Further, for example, the upper limit of the output voltage of the solar cell is 100 V and the lower limit of the output voltage of the solar cell is desired to be kept at 75 V. In other words, setting is Vt₀ = 75 V, and the input voltage to the inverted output terminal of the operational amplifier 124 is (kc × 75) V.

Further, the upper limit and the lower limit of the output voltage from the control unit CU1 (voltage V10) are respectively set at, for example, 48 V and 45 V. In other words, setting is Vb = 45 V, and the input voltage to the inverted output terminal of the operational amplifier 155 is (kb × 45) V. Note that the value 48 V which is the upper limit of the output voltage from the control unit CU1 is adjusted by suitably selecting the resistance Rc1 and resistance Rc2 inside the conversion unit 100a. In other words, the target voltage value of the output from the control unit CU1 is set at 48 V.

Further, the upper limit and the lower limit of the output voltage from the charging control unit 140 of the battery unit BU1a are respectively set at, for example, 42 V and 28 V. Therefore, the resistance Rb1, resistance Rb2, and resistance Rb3 inside the charging control unit 140 are selected such that the upper limit and the lower limit of the output voltage from the charging control unit 140 become 42V and 28V respectively.

Meanwhile, a time when the voltage V10 which is the input voltage to the charging control unit 140 is the upper limit corresponds to a state in which the charging rate toward the battery Ba is 100%, and a time when the voltage V10 is the lower limit corresponds to a state in which the charging rate toward the battery Ba is 0%. In other words, the time when the voltage V10 toward the charging control unit 140 is 48 V corresponds to the state in which the charging rate toward the battery Ba is 100%, and the time when the voltage V10 toward the charging control unit 140 is 45 V corresponds to the state in which the charging rate toward the battery Ba is 0%. The charging rate is set in the range from 0 to 100% in accordance with fluctuation of the voltage V10 in the range from 45 V to 48 V.

Note that control of the charging rate toward the battery may be executed in parallel apart from the cooperative control. In other words, since constant current charge is executed at the beginning of charge, the charging voltage is adjusted so as to keep the charging current equal to or lower than the predetermined level by executing feedback adjustment for the output from the charging control unit 140, and in the final stage, the charging voltage is kept equal to or lower than the predetermined level. Here, the charging voltage to be adjusted is equal to or lower than the voltage adjusted by the above-described cooperative control. In this manner, charging processing is executed within the power supplied from the control unit CU1.

First, the changes of the operating point at the time of executing the cooperative control in the case where illuminance to the solar cell is changed will be described.

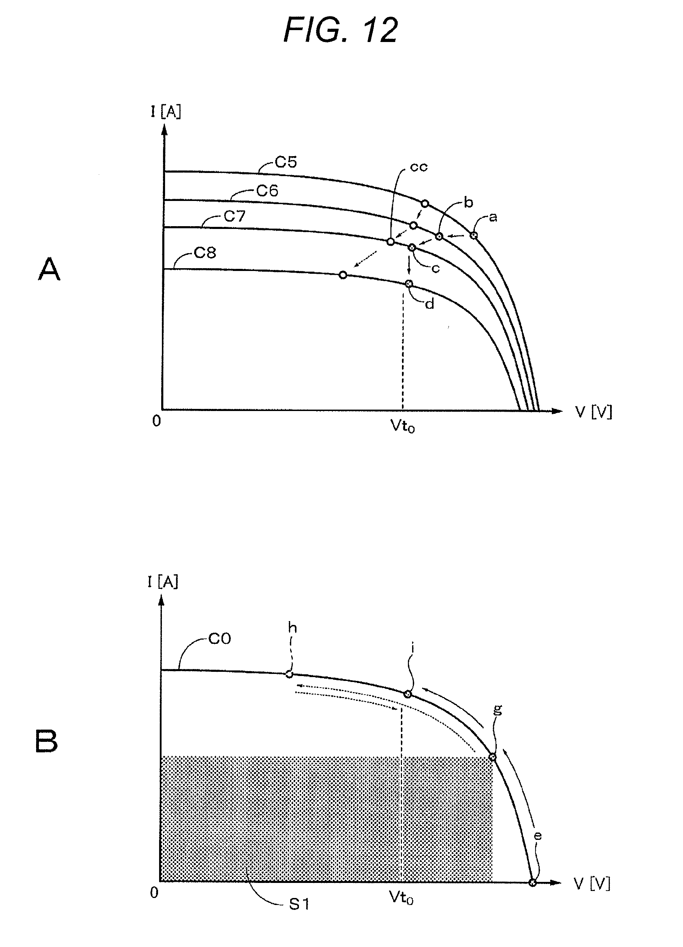

Fig. 12A is an explanatory diagram for the changes of the operating point at the time of executing cooperative control in the case where illuminance to the solar cell is reduced. In Fig. 12A, the vertical axis represents the terminal current of the solar cell, and the horizontal axis represents the terminal voltage of the solar cell. Further, a white circle in Fig. 12A indicates the operating point at the time of executing the MPPT control, and a shaded circle in Fig. 12A indicates the operating point at the time of executing the cooperative control. The curves C5 to C8 illustrated in Fig. 12A indicate the voltage-current characteristics of the solar cell in the case where illuminance to the solar cell is changed.

Now, it is assumed that power required by the battery Ba is 100 W (watt) and the voltage-current characteristics of the solar cell is indicated by the curve C5 (state under the finest weather). The operating point of the solar cell at this point is indicated by point a on the curve C5, for example, and it is assumed that power (supplied amount) supplied from the solar cell to the battery Ba via the conversion unit 100a and the charging control unit 140 exceeds the power (demanded amount) required by the battery Ba.

In the case where the power supplied from the solar cell to the battery Ba exceeds the power required by the battery Ba, the voltage V10 which is the output voltage from the control unit CU1 to the battery unit BU1a becomes the upper limit 48 V. In other words, since the voltage V10 which is the input voltage to the battery unit BU1a is 48 V, the output voltage from the charging control unit 140 of the battery unit BU1a is to be the upper limit 42 V, and charging the battery Ba is executed at the charging rate of 100%. While it has been described that the charging the battery is executed at 100%, note that the charging is not limited to 100% and the charging rate can be suitably adjusted in accordance with the characteristics of the battery.

When the weather becomes cloudy from this state, the curve indicating the voltage-current characteristics of the solar cell is changed from the curve C5 to the curve C6. Since the sky starts to be overcast, the terminal voltage of the solar cell is gradually decreased and the output voltage from the control unit CU1 to the battery unit BU1a is gradually decreased as well. Therefore, the operating point of the solar cell moves to, for example, point b on the curve C6 due to change of the curve indicating the voltage-current characteristics of the solar cell from the curve C5 to the curve C6.

In the case where the sky is further overcast from this state, the curve indicating the voltage-current characteristics of the solar cell changes from the curve C6 to the curve C7, and the terminal voltage of the solar cell is gradually decreased, thereby decreasing the voltage V10 which is the output voltage from the control unit CU1 to the battery unit BU1a. When the voltage V10 is decreased to a certain level, 100% of the power cannot be supplied to the battery Ba.

At this point, in the case where the terminal voltage of the solar cell becomes close to the lower limit, namely, Vt₀ = 75V from 100V, the conversion unit 100a of the control unit CU1 starts to step down the voltage V10 toward the battery unit BU1a from 48 V to Vb = 45V.

When the voltage V10 is stepped down, the input voltage toward the battery unit BU1a is decreased, and therefore, the charging control unit 140 of the battery unit BU1a starts to step down the output voltage toward the battery Ba. When the voltage V10 is stepped down, the charging current supplied to the battery Ba is decreased, thereby slowing down charging the battery Ba connected to the charging control unit 140. In other words, the charging rate toward the battery Ba is decreased.

When the charging rate toward the battery Ba is decreased, the power consumption is decreased, thereby reducing the load from the standpoint of the solar cell. Consequently, the terminal voltage of the solar cell is increased (recovered) by the reduced load from the standpoint of the solar cell.

When the terminal voltage of the solar cell is boosted, a degree of stepping down the voltage V10 by the control unit CU1 is reduced, thereby boosting the input voltage toward the battery unit BU1a. Since the input voltage toward the battery unit BU1a is boosted, the charging control unit 140 of the battery unit BU1a boosts the output voltage from the charging control unit 140, thereby increasing the charging rate toward the battery Ba.

When the charging rate toward the battery Ba is increased, the load is increased from the standpoint of the solar cell, thereby stepping down the terminal voltage of the solar cell by the increased amount of the load from the standpoint of the solar cell. When the terminal voltage of the solar cell is stepped down, the conversion unit 100a of the control unit CU1 steps down the output voltage toward the battery unit BU1a.

After that, the above-described adjustment for the charging rate is automatically repeated until the output voltage from the control unit CU1 to the battery unit BU1a reaches a specific convergence value and the balance between demand and supply of power can be achieved.

The cooperative control is not controlled by software, different from the MPPT control. Therefore, calculation of the terminal voltage providing the optimum operating point is unnecessary in the cooperative control. Also, calculation by the CPU does not intervene when adjusting the charging rate according to the cooperative control. Therefore, power consumption is small in the cooperative control, compared to the MPPT control, and the above-described adjustment of the charging rate is executed in a short period such as about a few nanoseconds to a few hundred nanoseconds.

Moreover, the conversion unit 100a and the charging control unit 140 are only to detect the input voltage received therein and adjust the output voltage, and therefore, no analog-digital conversion is necessary and no communication between the control unit CU1 and the battery unit BU1a is necessary. Therefore, the cooperative control does not require any intricate circuit, and the circuit for implementing the cooperative control circuit is to be compact.

Now, it is assumed that the control unit CU1 could supply power of 100 W when the operating point was at the point a on the curve C5, and the output voltage from the control unit CU1 toward the battery unit BU1a has reached a specific convergence value. In other words, it is assumed that the operating point of the solar cell has moved to, for example, point c on the curve C7. At this point, the power supplied to the battery Ba falls below the power of 100 W, but as illustrated in Fig. 12A, the power not inferior to the case of executing the MPPT control can be supplied to battery Ba, depending on a selected value of the voltage Vt₀.

When the sky is further overcast, the curve indicating the voltage-current characteristics of the solar cell is changed from the curve C7 to the curve C8, and the operating point of the solar cell moves to, for example, point d on the curve C8.

As illustrated in Fig. 12A, under the cooperative control, the balance between demand and supply of power is adjusted. Therefore, the terminal voltage of the solar cell is prevented from falling below the voltage Vt₀. In other words, even in the case where illuminance to the solar cell is extremely reduced, the terminal voltage of the solar cell is prevented from falling below the voltage Vt₀ under the cooperative control.

In the case where illuminance to the solar cell is extremely reduced, the terminal voltage of the solar cell becomes a value close to the voltage Vt₀, and the current amount supplied to the battery Ba becomes little. Therefore, in the case where illuminance to the solar cell is extremely reduced, it takes quite a time to charge the battery Ba, but the terminal voltage of the solar cell does not drop and the system 1 does not go down because the demand and supply of the power is well balanced.

As described above, since the charging rate is adjusted in a short time in the cooperative control, the system 1 can be prevented from going down according to the cooperative control even in the case where the sky is suddenly overcast and illuminance to the solar cell is rapidly reduced.

Next, description will be given for the changes of the operating point at the time of executing the cooperative control in the case where the load from the standpoint of the solar cell is changed.

Fig. 12B is an explanatory diagram for the changes of the operating point at the time of executing cooperative control in the case where the load from the standpoint of the solar cell is increased. In Fig. 12B, the vertical axis represents the terminal current of the solar cell, and the horizontal axis represents the terminal voltage of the solar cell. Further, a shaded circle in Fig. 12B indicates the operating point at the time of executing the cooperative control.

Now, it is assumed that illuminance to the solar cell has no change and the voltage-current characteristics of the solar cell are indicated by curve C0 illustrated in Fig. 12B.

Since it can be considered there is almost no power consumption immediately after starting the each of the blocks BL, the terminal voltage of the solar cell is supposed to be almost equal to the open voltage. Therefore, it can be considered that the operating point of the solar cell immediately after starting each of the blocks BL is be at point e on the curve C0, for example. Note that the output voltage from the control unit CU1 toward the battery unit BU1a is the upper limit, 48 V.

When power supply to the battery Ba connected to the battery unit BU1a is started, the operating point of the solar cell moves to, for example, point g on the curve C0. Note that an area of a shaded region S1 illustrated in Fig. 12B is equal to 100 W because the power required by battery Ba is 100 W in the description of the present embodiment.

A time when the operating point of the solar cell is at the point g on the curve C0 corresponds to a state in which the power supplied from the solar cell toward the battery Ba via the conversion unit 100a and charging control unit 140 exceeds the power required by the battery Ba. Therefore, the terminal voltage of the solar cell, the output voltage from the control unit CU1, and the power supplied to the battery Ba when the operating point is at the point g on the curve C0 are slightly lower than 100 V, 48 V, and 42 V respectively.

Here, it is assumed that the battery unit BUlb having the same configuration as the battery unit BU1a is newly connected to the control unit CU1. Assuming that a battery (conveniently referred to as battery Bb) included in the battery unit BUlb requires the power of 100 W for charging as is the case with the battery Ba connected to the battery unit BU1a, power consumption is increased and the load from the standpoint of the solar cell is rapidly increased.

To supply power of 200 W in total to the two batteries, the output current is required to be doubled in total while keeping the output voltage from the charging control unit 140 of the battery unit BU1a and the output voltage of the charging control unit 140 of the battery unit BU1b, for example.

However, in the case where the power generator is the solar cell, the terminal voltage of the solar cell is decreased due to the increase of the output current from the charging control unit 140 included in the battery unit BU1a and the output current from the charging control unit 140 included in the battery unit BU1b. Therefore, the total output current is required to be doubled, compared to when the operating point of the solar cell is at the point g. That means, as illustrated in Fig. 12B, the operating point of the solar cell is required to be at point h on the curve C0, for example, and the terminal voltage of the solar cell is rapidly decreased. When the terminal voltage of the solar cell is rapidly decreased, the voltage V3 may drop and the system 1 may go down.

According to the cooperative control, when the terminal voltage of the solar cell is decreased because of the newly connected battery unit BU1b, the cooperative control is executed in the block BL1 and the balance between demand and supply of power is adjusted. More specifically, the charging rate toward the two batteries is automatically decreased such that the power supplied to the battery Ba included in the battery unit BU1a and the battery Bb included in the battery unit BUlb becomes 150 W in total, for example.

In other words, when the terminal voltage of the solar cell is decreased because of the newly connected battery unit BU1b, the output voltage from the control unit CU1 to the battery unit BU1a and the battery unit BUlb is also decreased. When the terminal voltage of the solar cell becomes close to the lower limit, namely Vt₀ = 75 V, from 100 V, the conversion unit 100a of the control unit CU1 starts to step down the output voltage toward the battery unit BU1a and battery unit BUlb from 48 V to Vb = 45 V.

When the output voltage from the control unit CU1 toward the battery unit BU1a and the battery unit BUb is stepped down, the input voltage to the battery unit BU1a and battery unit BUb is decreased. Then, the charging control unit 140 included in the battery unit BU1a and the charging control unit 140 included in the battery unit BUlb start to step down the output voltage toward the battery Ba and battery Bb respectively. When the output voltage from each of the charging control units 140 is stepped down, charging the battery Ba and battery Bb is slowed down. In other words, the charging rate toward the respective batteries is reduced.

When the charging rate toward the respective batteries is reduced, the power consumption is reduced as a whole. Therefore, the load from the standpoint of the solar cell is reduced and the terminal voltage of the solar cell is increased (recovered) by an amount of the reduced load.

After that, same as the case where the illuminance to the solar cell is rapidly reduced, the charging rate is adjusted until the output voltage from the control unit CU1 toward the battery unit BU1a and battery unit BUlb reaches a specific convergence value and the balance between demand and supply of power is achieved.

Note that the actual convergence voltage value is different depending on the situation. Accordingly, although the actual convergence voltage value is not clear, the convergence voltage value is estimated to be the voltage slightly higher than the lower limit Vt₀ value because charging is stopped when the terminal voltage of the solar cell becomes the lower limit, namely, Vt₀ = 75 V. Also, since the respective battery units are not controlled in an interlocking manner, the charging rate is estimated to be different from one another due to variation of devices to be used although the respective battery units have the same configuration. However, consequently, there is no difference in being capable of executing the cooperative control.

Since the charging rate is adjusted in an extremely short time according to the cooperative control, the operating point of the solar cell moves to point i from the point g on the curve C0 when the battery unit BUlb is newly connected. Note that the operating point of the solar cell does not actually move to the point h under the cooperative control while the point h is illustrated in Fig. 12B as an example of the operating point on the curve C0 for the sake of description.

Thus, according to the cooperative control, when the load is increased from the standpoint of the solar cell, the charging control unit 140 included in each of the battery units BU1 detects the input voltage applied to oneself, and the charging control unit 140 in each of the battery units BU1 automatically controls the amount of current. According to the cooperative control, the system 1 can be prevented from going down even in the case where the load is rapidly increased from the standpoint of the solar cell due to the increased number of battery units BU1 connected to the control unit CU1.

Next, description will be given for the changes of the operating point at the time of executing the cooperative control in the case where both the illuminance to the solar cell and the load from the standpoint of the solar cell are changed.

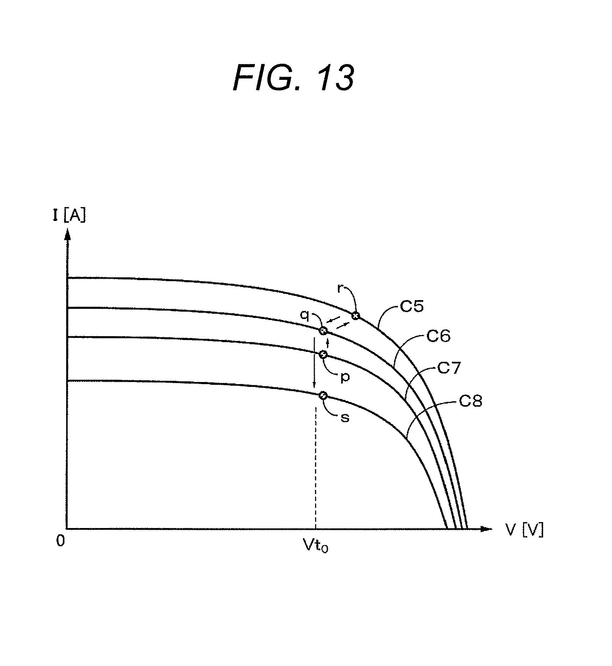

Fig. 13 is an explanatory diagram for the changes of the operating point at the time of executing cooperative control in the case where both illuminance to the solar cell and the load in view of the solar cell are changed. In Fig. 13, the vertical axis represents terminal current of the solar cell and the horizontal axis represents the terminal voltage of the solar cell. Further, a shaded circle in Fig. 13 indicates the operating point at the time of executing the cooperative control. The curves C5 to C8 illustrated in Fig. 13 indicate the voltage-current characteristics of the solar cell in the case where illuminance to the solar cell is changed.

First, it is assumed that the battery unit BU1a including the battery Ba and requiring the power of 100 W for charging is connected to the control unit CU1. Further, the voltage-current characteristics of the solar cell are indicated by the curve C7, and the operating point of the solar cell is indicated by point p on the curve C7.

As illustrated in Fig. 13, it is assumed that the terminal voltage of the solar cell at the point p is quite close to the voltage Vt₀ preset as the lower limit of the output voltage of the solar cell. The state in which the terminal voltage of the solar cell is quite close to the voltage Vt₀ indicates that the charging rate is adjusted by the cooperative control and the charging rate is extremely suppressed. In other words, the state in which the operating point of the solar cell is indicated by the point p illustrated in Fig. 13 indicates that the power supplied to the battery Ba via the charging control unit 140 largely exceeds the power supplied to the conversion unit 100a of the control unit CU1 from the solar cell. Therefore, in the state in which the operating point of the solar cell is indicated by the point p illustrated in Fig. 13, the charging rate is considerably adjusted, and the power quite smaller than 100 W is supplied to the charging control unit 140 that charges the battery Ba.

Next, it is assumed that illuminance to the solar cell is increased and the curve indicating the voltage-current characteristics of the solar cell is changed from the curve C7 to the curve C6. Further, it is assumed that the battery unit BUlb having the same configuration as the battery unit BU1a is newly connected to the control unit CU1. At this point, the operating point of the solar cell moves to, for example, point q on the curve C6 from the point p on the curve C7.

Since the two battery units are connected to the control unit CU1, the power consumption becomes 200 W when the charging control unit 140 included in the battery unit BU1a and the charging control unit 140 included in the battery unit BUlb fully charge the battery Ba and battery Bb. However, in the case where illuminance to the solar cell is not sufficient, the cooperative control is continued and the power consumption is adjusted less than 200 W (e.g., 150 W or the like).

Next, it is assumed that the curve indicating the voltage-current characteristics of the solar cell is changed from the curve C6 to the curve C5 by the sky clearing up and the like. At this point, when the generated power from the solar cell is increased due to the increase of illuminance to the solar cell, the output current from the solar cell is increased.

When the illuminance to the solar cell is sufficiently increased and then the generated power from the solar cell is further increased, the terminal voltage of the solar cell reaches to a sufficiently large value at a certain point, compared to the voltage Vt₀. When the power supplied to the two batteries of the battery unit BU1a and battery unit BUlb exceeds the power required for charging the two batteries, charging rate adjustment according to the cooperative control is eased or automatically cancelled.

At this point, the operating point of the solar cell is indicated by, for example, point r on the curve C5, and charging the respective battery Ba and battery Bb is executed at the charging rate of 100%.

Next, it is assumed that illuminance to the solar cell is reduced and the curve indicating the voltage-current characteristics of the solar cell is changed from the curve C5 to the curve C6.

Then, the terminal voltage of the solar cell is decreased, and when the terminal voltage of the solar cell becomes close to the preset voltage Vt₀, the charging rate adjustment is executed again according to the cooperative control. The operating point of the solar cell at this point is indicated by the point q on the curve C6.

Next, it is assumed that illuminance to the solar cell is reduced and the curve indicating the voltage-current characteristics of the solar cell is changed from the curve C6 to the curve C8.

Then, the charging rate is adjusted such that the terminal voltage of the solar cell does not fall below the voltage Vt₀. Therefore, the terminal current from the solar cell is decreased and the operating point of the solar cell moves to point s on the curve C8 from the point q on the curve C6.

According to the cooperative control, the balance between demand and supply of the power is adjusted between the control unit CU1 and each of the battery units BU1 such that the input voltage toward each of the battery units BU1 does not fall below the preset voltage Vt₀. Therefore, according to the cooperative control, the charging rate toward each of the batteries B can be changed in real time in accordance with input-side supply capacity from the standpoint of each of the battery units BU1. Thus, according to the cooperative control, it is possible to handle not only the change of illuminance to the solar cell but also the change of the load from the standpoint of the solar cell.

In the case of using the output from the solar power generator 3 in other blocks BL, the cooperative control is executed in the same manner. The balance between demand and supply of power is adjusted in the respective blocks, and as a result, the balance between demand and supply of the power is achieved in the entire system 1. The system 1 can be prevented from going down even in the case where the output from the solar power generator 3 and wind force power generator 4 is decreased and even in the case where the load is increased from the standpoint of the solar power generator 3 and the like.

Note that the voltage corresponding to the predetermined rotary speed of the motor section included in the wind force power generator 4 may be input to the feedback system as described above. This can prevent the rotary speed of the motor section from falling below a predetermined number of times.

### <2. Second Embodiment>

### [2-1. Outline of Second Embodiment]

Next, a second embodiment will be described. The second embodiment has a system configuration same as a system 1 according to a first embodiment. A control unit and a battery unit constituting the system have the same configurations and operate same as the first embodiment. The description for the matters same as the first embodiment will be omitted, accordingly.

A control unit CU2 in a block BL2 includes a conversion unit 200a, a conversion unit 200b, and a conversion unit 200c. Voltage V3 is received by the conversion unit 200a. Voltage V4 is received by the conversion unit 200b. Voltage V5 is received by the conversion unit 200c. The control unit CU2 includes a CPU and a memory same as a control unit CU1. The CPU included in the control unit CU2 is referred to as a CPU 210, and the memory included in the control unit CU2 is referred to as a memory 211.

A control unit CU3 in a block BL3 includes a conversion unit 300a, a conversion unit 300b, and a conversion unit 300c. The voltage V3 is received by the conversion unit 300a. The voltage V4 is received by the conversion unit 300b. The voltage V5 is received by the conversion unit 300c. The control unit CU3 includes a CPU and a memory same as the control unit CU1. The CPU included in the control unit CU3 is referred to as a CPU 310, and the memory included in the control unit CU3 is referred to as a memory 311.

As described in the first embodiment, an output from any one of the conversion units can be preferentially used by suitably adjusting a resistance value of a variable resistor provided in each of the conversion units, for example. In other words, among an output from a solar power generator 3, the output from a wind force power generator 4, and the output from a biomass power generator 5, the output from any of them can be preferentially supplied to a battery unit BU.

Meanwhile, for example, in the case where the output from the solar power generator 3 is preferentially used, only the conversion unit 100a is required to be started in a block BL1, and the conversion unit 100b and conversion unit 100c are not required to be started. According to the second embodiment, on-off control for the conversion unit in each of control units CU is efficiently executed by using a schedule table, for example.

### [2-2. Operation based on Schedule Table and Schedule Table]

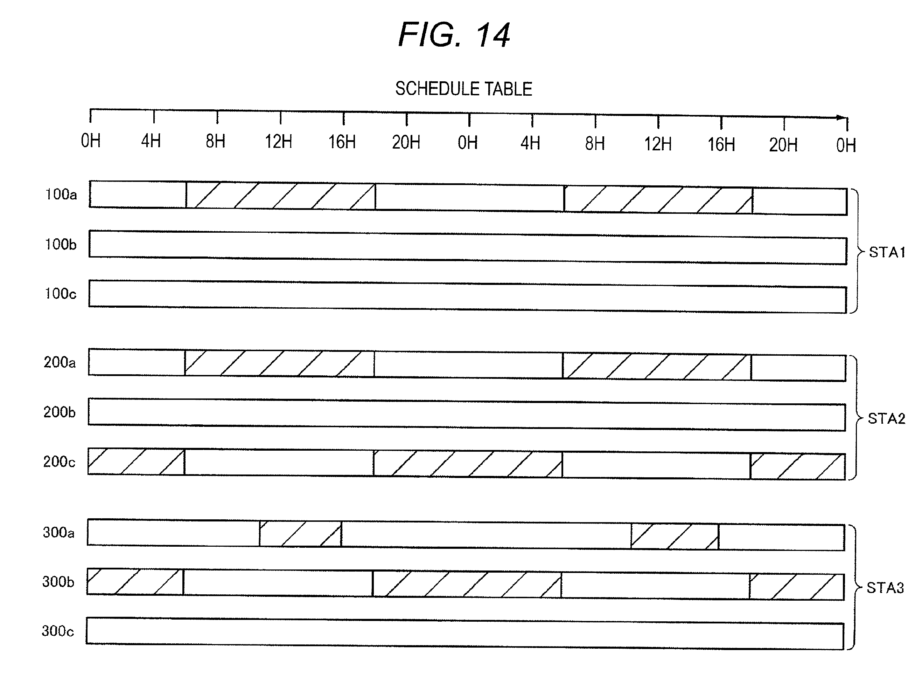

Fig. 14 is a diagram illustrating an exemplary schedule table for two days. The schedule table includes, for example, a schedule table STA1 for the control unit CU1, a schedule table STA2 for the control unit CU2, and a schedule table STA3 for the control unit CU3. In each of the schedule tables STA, on/off periods for each of the conversion units are described. In each of the schedule tables STA, an electronic switch of a relevant conversion unit is turned on in a time zone corresponding to a shaded portion, thereby starting the conversion unit.

The schedule table STA1 is stored in a memory 111 included in the control unit CU1. The CPU 110 refers to the schedule table STA1 and executes on-off control for the conversion unit 100a, conversion unit 100b, and conversion unit 100c.

In accordance with the schedule table STA1, the CPU 110 turns on the electronic switch (electronic switch 101c and electronic switch 101f) of the conversion unit 100a in a daytime time zone (e.g., from 6 o'clock in the morning to 18 o'clock) during which it can be considered that the output from the solar power generator 3 is increased, and turns on the conversion unit 100a.

The schedule table STA2 is stored in the memory 211 in the control unit CU2. The CPU 210 refers to the schedule table STA2, and executes on-off control for the conversion unit 200a, conversion unit 200b, and conversion unit 200c.

In accordance with the schedule table STA2, the CPU 210 turns on the electronic switch of the conversion unit 200a in the daytime time zone (e.g., from 6 o'clock in the morning to 18 o'clock) during which it can be considered that the output from the solar power generator 3 is increased, and turns on the conversion unit 200a. The CPU 210 turns on the electronic switch of the conversion unit 200c in a night-time time zone (e.g., from 18 o'clock to 6 o'clock) during which it can be considered that the output from the solar power generator 3 is substantially zero.

The schedule table STA3 is stored in a memory 311 included in the control unit CU3. The CPU 310 refers to the schedule table STA3, and executes on-off control for the conversion unit 300a, conversion unit 300b, and conversion unit 300c.

In accordance with the schedule table STA3, the CPU 310 turns on the electronic switch of the conversion unit 300a in a time zone (e.g., from 10 o'clock to 16 o'clock) during which it can be considered that the output from the solar power generator 3 is largely increased, and turns on the conversion unit 300a. The CPU 310 turns on the electronic switch of the conversion unit 300b in the night-time time zone (e.g., from 18 o'clock to 6 o'clock).

In the daytime, the conversion unit configured to mainly processes the voltage V3 which is the output from the solar power generator 3 is started, and in the night time, the conversion unit configured to mainly processes the voltage V4 and voltage V5 which are outputs from the wind force power generator 4 and biomass power generator 5 is started. Further, in the time zone (from nearly noon to nearly evening time) during which the output from the solar power generator 3 is expected to be increased, all of the conversion units (conversion unit 100a, conversion unit 200a, and conversion unit 300a) which process voltage supplied from the solar power generator 3 are to be started, thereby effectively using the output from the solar power generator 3. Furthermore, the conversion unit is prevented from being started needlessly.

Meanwhile, the schedule table STA used for processing can be updated (changed), if necessary. For instance, the respective control units CU keep the schedule table STA1, schedule table STA2, and schedule table STA3. On the first two days, the CPU 110 executes on-off control for the conversion unit 100 based on the schedule table STA1, on the next two days, executes on-off control for the conversion unit 100 based on the schedule table STA2, and on another next two days, executes on-off control for the conversion unit 100 based on the schedule table STA3.

On the first two days, the CPU 210 executes on-off control for the conversion unit 200 based on the schedule table STA2, on the next two days, executes on-off control for the conversion unit 200 based on the schedule table STA3, and on another next two days, executes on-off control for the conversion unit 200 based on the schedule table STA1.

On the first two days, the CPU 310 executes on-off control for the conversion unit 300 based on the schedule table STA3, on the next two days, executes on-off control for the conversion unit 300 based on the schedule table STA1, and on another next two days, executes on-off control for the conversion unit 300 based on the schedule table STA2. Thus, the respective control units CU keep a plurality of schedule tables STA, and may be configured to switch the using schedule table STA per predetermined period (e.g., per season).

Contents of the schedule tables STA may be dynamically changed. For instance, the CPU in each of the control units CU acquires information related to weather conditions (fair, cloudy, rainy, typhoon approach), and may change the schedule table STA to be referred to in accordance with the acquired information related to the weather conditions. The schedule table STA is created for each of the weather conditions.

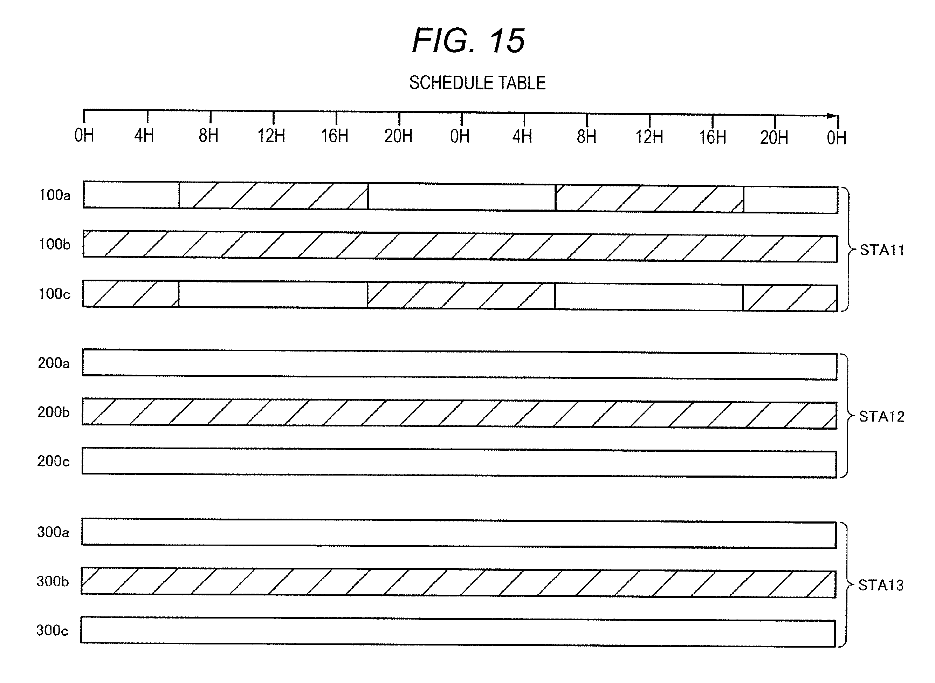

Fig. 15 is a diagram illustrating examples of a schedule table STA11, a schedule table STA12, and a schedule table STA13 when typhoon approach is anticipated. The CPU 110 refers to the schedule table STA11, and executes on-off control for the conversion unit 100. The CPU 210 refers to the schedule table STA12, and executes on-off control for the conversion unit 200. The CPU 310 refers to the schedule table STA13, and executes on-off control for the conversion unit 300.

Since the wind power is expected to be increased because of the typhoon approach, the conversion units (conversion unit 100b, conversion unit 200b, and conversion unit 300b) which process the output from the wind force power generator 4 are turned on in all of the schedule table STA11, schedule table STA12, and schedule table STA13. Thus, the schedule table STA to be referred may be changed in accordance with the forecasted weather, for example. The schedule table STA to suit the forecasted weather may be transmitted from an external server to each of the control units CU. The schedule table STA may be also created based on statistical data in a place where the wind force power generator 4 is installed (e.g., time zone when the wind is strong, time zone when the wind is weak, etc.).

### <3. Third Embodiment>

### [3-1. Outline of Third Embodiment]

Next, a third embodiment will be described. The third embodiment has a system configuration same as a system 1 according to a first embodiment. A control unit and a battery unit constituting the system have the same configurations and operate same as the first embodiment. The description for the matters same as the first embodiment and a second embodiment will be omitted, accordingly.

The outline of the third embodiment will be described. As exemplified in the second embodiment, on-off control for a conversion unit 100 is executed based on a schedule table STA1, on-off control for a conversion unit 200 is executed based on a schedule table STA2, and on-off control for a conversion unit 300 is executed based on a schedule table STA3. For instance, starting the conversion unit 100a and conversion unit 200a at 6 o'clock is commanded by the schedule table STA1 and schedule table STA2.

The conversion unit 100a starts a battery unit required to be charged (e.g., battery unit BU1a) and charges the battery unit BU1a. The conversion unit 200a starts the battery unit required to be charged (e.g., battery unit BU2a) and charges the battery unit BU2a. Particularly, when a plurality of conversion units is started at a time and charging processing to battery units BU connected to each of the conversion units is executed in the case where voltage V3 which is an output of a solar power generator 3 is small, the voltage V3 may drop and system 1 may go down. According to the third embodiment, start of the conversion unit is suitably controlled, considering this point.

### [3-2. Processing Flow]

A processing flow according to the third embodiment will be described. In the case where the plurality of conversion units that processes the output from the same power generator is started based on the schedule table STA, a CPU in each of the control unit CU executes, at a different timing, determining processing on whether to actually start each conversion unit. For instance, the determining processing on whether to actually start the conversion unit is executed in a time sharing manner. The timing of executing the determining processing on whether to actually start the conversion unit may be described in the schedule table STA. In the following description, description will be given by exemplifying a case in which starting the conversion unit 100a and conversion unit 200a in a same time zone is commanded by the schedule table STA.

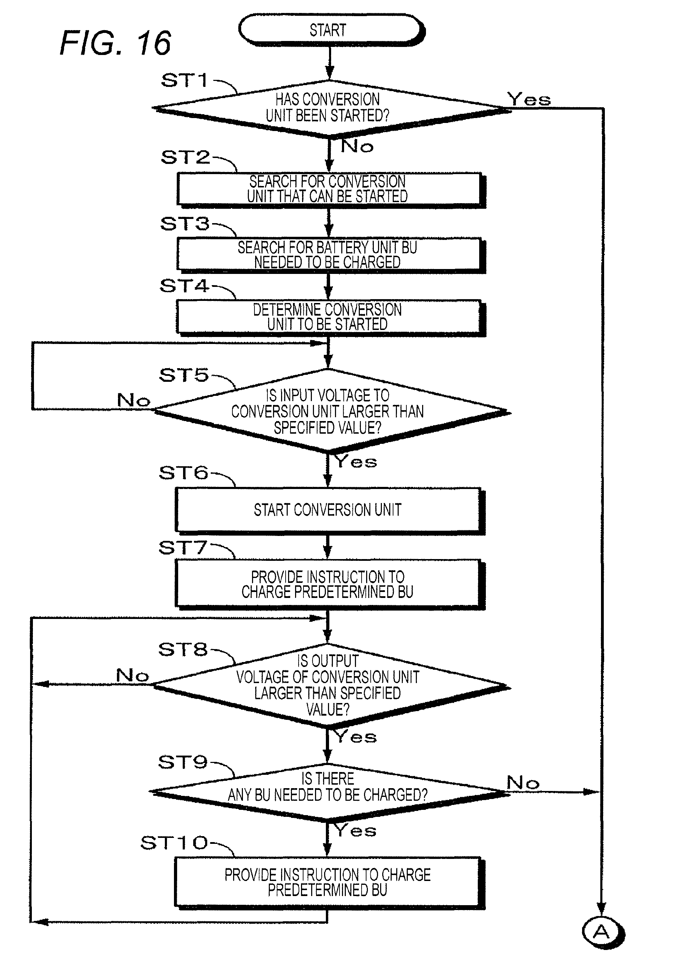

Fig. 16 is a flowchart illustrating an exemplary processing flow according to the third embodiment. In step ST1, determination is made on whether any one of the conversion unit 100a and conversion unit 200a commanded to be started by the schedule table STA has been started or not. In an initial state, the processing proceeds to step ST2 because the conversion unit 100a and conversion unit 200a have not been started yet.

The determining processing on whether to start the converting unit is executed by the control unit CU1 first. The determining processing may also be started from a control unit CU2. In step ST2, searching processing for a conversion unit that can be started is executed. The conversion unit that can be started means, for example, a conversion unit commanded to be started by the schedule table STA. Here, since starting the conversion unit 100a is commanded by the schedule table STA, the conversion unit 100a is set as the conversion unit that can be started. Then, the processing proceeds to step ST3.

In step ST3, a CPU 110 communicates with the CPU of the battery unit (e.g., battery unit BU1a, battery unit BU1b, and battery unit BU1c) connected to the control unit CU1. By this communication, the CPU 110 acquires information related to residual capacity of a battery B included in each battery unit BU1.

The CPU 110 searches for the battery unit BU1 needed to be charged based on the acquired information related to the residual capacity and determines, based on a searching result, the battery unit to be charged. The CPU 110 determines the battery unit BU1 having the least residual capacity as the battery unit to be charged, for example. Here, description will be given, assuming that the battery unit BU1a is determined as the battery unit to be charged. Then, the processing proceeds to step ST4, and the conversion unit 100a is determined as the conversion unit to be started. Meanwhile, in the case where all of the battery units BU1 connected to the control unit CU1 have the residual capacity exceeding a threshold, later-described processing (processing indicated by A in Fig. 16) in the control unit CU2 may be executed. Then, the processing proceeds to step ST5.

In step ST5, determination is made on whether the voltage V3 which is input voltage to the conversion unit 100a is larger than a specified value. The specified value is a voltage value for determining whether to start the conversion unit and is set to 90 V, for example. The voltage V3 is acquired by a voltage sensor (e.g., voltage sensor 101b) included in the conversion unit 100a, and the acquired sensor information is supplied to the CPU 110. As a result of the determination, the determining processing in step ST5 is repeated for a predetermined period in the case where the voltage V3 does not exceed the specified value. In the case where the voltage V3 does not exceed 90 V even after the determining processing is repeated for the predetermined period, the processing by the CPU 110 of the control unit CU1 finishes, and the processing by the CPU 210 of the control unit CU2 is executed.

In step ST5, in the case where the voltage V3 exceeds 90 V, the processing proceeds to step ST6. In step ST6, the CPU 110 turns on an electronic switch 101c and an electronic switch 101f to start the conversion unit 100a. At this point, power is not consumed in the battery unit BU1, and therefore, voltage V10 which is an output of the conversion unit 100a becomes substantially 48 V. Then, the processing proceeds to step ST7.

In step ST7, the CPU 110 transmits a control command to a CPU 145 of the battery unit BU1a to turn on and start charging. The CPU145 starts the charging control unit 140 in accordance with the control command and charges the battery Ba. Then, the processing proceeds to step ST8.

In step ST8, determination is made on whether the voltage V10 which is the output voltage of the conversion unit 100a is larger than a specified value. This specified value is a value indicating whether there is enough power for supply and charging other battery units BU is permitted or not. The specified value is set to, for example, 47 V. The voltage V10 is acquired by, for example, the voltage sensor 101g.

In the case where the voltage V10 is 47 V or less, the processing returns to step ST8. Meanwhile, in the case where the voltage V10 does not exceed 47 V although the determining processing in step ST8 is repeated for a predetermined period, the processing by the CPU 110 of the control unit CU1 finishes, and the processing by the CPU 210 of the control unit CU2 is executed. In the case where the voltage V10 is larger than 47 V, the processing proceeds to step ST9.

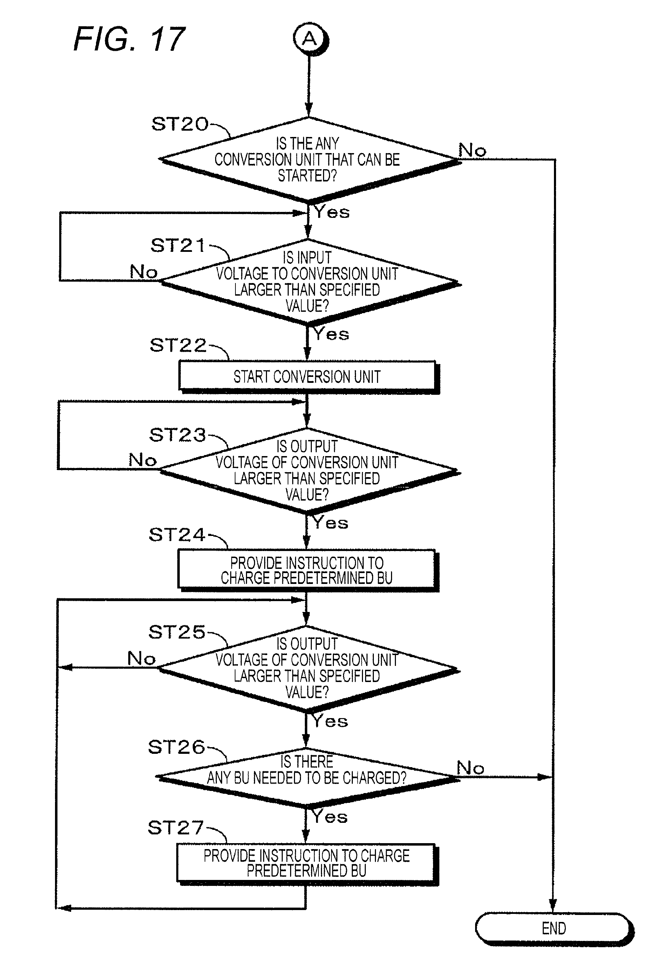

In step ST9, determination is made on whether there is other battery unit needed to be charged besides the battery unit BU1a. For example, the battery unit having the second least residual capacity is set as the battery unit needed to be charged. In step ST9, in the case where there is any battery unit needed to be charged, the processing proceeds to step ST10. In step ST10, control for charging the battery of the concerning battery is executed in the same manner as step ST7. In step ST9, in the case there is no battery unit needed to be charged besides the battery unit BU1a, the processing proceeds to A. Note that the processing referred to as A in Fig. 16 indicates continuity to later-described processing in Fig. 17 and does not indicate any specific processing.

The processing may also proceed to the processing A after step ST8 without executing the processing in step ST9. For instance, the number of the battery units that can be charged in each block BL may be limited to one. The processing may be executed in consideration of necessity or urgency of charging the battery units connected to other control units. In this case, in the case where there is enough energy to supply, determining step (algorithm) for the battery unit to be charged is described in a program executed by the CPU in each control unit.

Fig. 17 is a flowchart illustrating the processing flow continued from A shown in Fig. 16. The processing exemplified in Fig. 17 is executed by the control unit CU2, for example. As described above, the process for determining whether to actually start the conversion unit is executed between the control units CU, for example, in a time sharing manner. There is no need to provide a configuration for executing communication between control units CU.

In step ST20, searching processing for a conversion unit that can be started is executed. The conversion unit that can be started means, for example, a conversion unit commanded to be started by the schedule table STA. Here, the conversion unit 200a is commanded to be started by the schedule table STA, and therefore, the conversion unit 200a is set as the conversion unit that can be started. Then, the processing proceeds to step ST21.

In step ST21, determination is made on whether the voltage V3 which is the input voltage to the conversion unit 200a is larger than a specified value. The specified value is a voltage value for determining whether to start the conversion unit and is set to 90 V, for example. The voltage V3 is acquired by a voltage sensor included in the conversion unit 200a, and the acquired sensor information is supplied to the CPU 210. As a result of the determination, the determining processing in step ST21 is repeated for a predetermined period in the case where the voltage V3 does not exceed the specified value. In the case where the voltage V3 does not exceed 90 V even though the determining processing is repeated for the predetermined period, the processing finishes. In other words, it is determined that there is not enough power for supply, and the conversion unit 200a is not started.

In step ST21, in the case where the voltage V3 exceeds 90 V, the processing proceeds to step ST22. In step ST22, the CPU210 turns on the electronic switch included in the conversion unit 200a to start the conversion unit 200a. Then, the processing proceeds to step ST23.

In step ST23, determination is made on whether the output voltage of the conversion unit 200a is larger than a specified value. The output voltage of the conversion unit 200a is supplied from the conversion unit 200a to the battery unit BU2. In the following, the output voltage of the conversion unit 200a is conveniently referred to as voltage V20.

This specified value in step ST23 is a value indicating whether there is enough power for supply and charging the battery unit BU is permitted or not. The specified value is set to, for example, 47 V. In the case where the voltage V20 is 47 V or less, the processing returns to step ST23. In the case where the voltage V20 does not exceed 47 V even though the determining processing in step ST23 is repeated for the predetermined period, the processing finishes. In this case, it is determined that there is not enough power for supply and control for executing charge is not executed. In the case where the voltage V20 is larger than 47 V, the processing proceeds to step ST24.

In step ST24, a predetermined battery unit out of the battery units BU2 connected to the control unit CU2 is charged. For instance, among the battery unit BU2a, battery unit BU2b, and battery unit BU2c, a battery unit having the least residual capacity is determined as the battery unit to be charged. In the case where all of the battery unit BU2a, battery unit BU2b, and battery unit BU2c connected to the battery unit BU2 are not needed to be charged, the processing finishes without executing charging.

The CPU 210 in the control unit CU2 controls charging the battery unit to be charged. Contents of control are same as the contents of control in step ST7 and step ST10 described above. Therefore, repetition of description will be omitted here. Then, the processing proceeds to step ST25.

In step ST25, determination is made on whether the voltage V20 is larger than 47 V, same as in ST23. In the case where the voltage V20 is 47 V or less, the processing returns to ST25 and the determining processing in step ST25 is repeated. In the case where the voltage V20 does not exceed 47 V even though the determining processing is repeated for the predetermined period, the processing finishes.

In the case where the voltage V20 is larger than 47 V in step ST25, the processing proceeds to step ST26. In step ST26, determination is made on whether there is any battery unit needed to be charged. In the case where there is not any battery unit needed to be charged, the processing finishes. In the case where there is a battery unit needed to be charged, the processing proceeds to step ST27 to executed the processing to charge the battery unit.

Thus, even in the case where starting the plurality of conversion units processing the outputs of the same power generator is commanded by the schedule table STA, the plurality of conversion unit is not started at the same time. The processing to determine whether to actually start the conversion unit is executed, and then on-off control for the conversion unit is executed based on the determining result.

By monitoring the output from the power generator (e.g., voltage V3), it is possible to determine whether there is enough power to supply to a load side. In the case where there is enough power for supply, control is executed so as to start the next conversion unit, and therefore, the output of the power generator is prevented from dropping and the system 1 is prevented from going down.

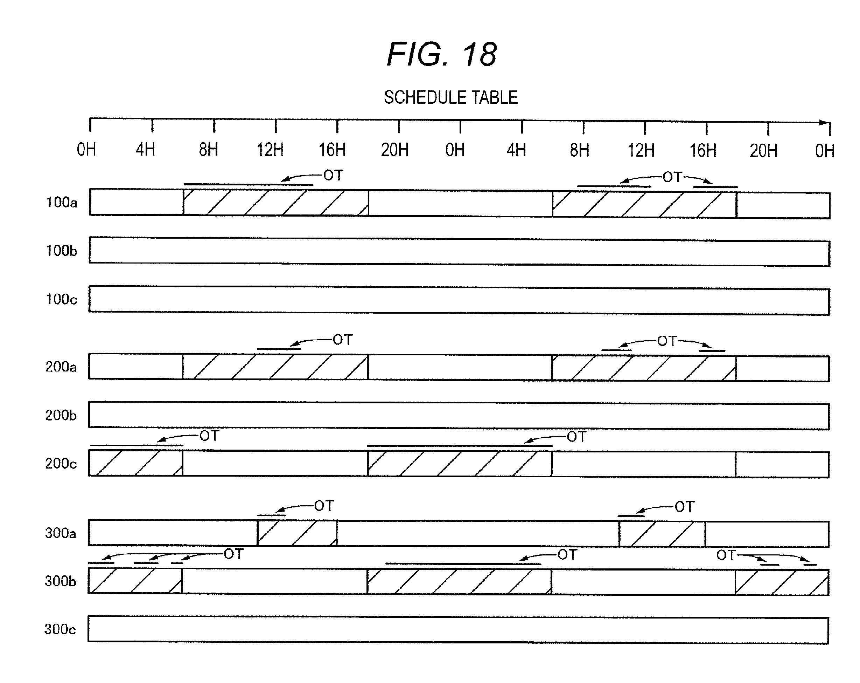

Even in the case where starting the conversion unit is commanded by the schedule table STA, the conversion unit is not always actually started. In Fig. 18, the time when each of the conversion units is actually started is schematically illustrated. The time when the conversion unit is actually started is schematically illustrated by a reference sign OT. Thus, according to the schedule table STA, starting the conversion unit is permitted only, and whether the conversion unit is actually started or not is suitably controlled by the output from the power generator.

The third embodiment is not limited to the start using the schedule table STA. The third embodiment may be further modified as follows. For instance, the battery unit BU1a is charged in accordance with control by the control unit CU1. The voltage V3 is decreased to, for example, 90 V or less. Since the voltage V3 is decreased to 90 V or less, the conversion unit 200a in the control unit CU2 is not started.

The control unit CU2 acquires voltage V4 acquired by a voltage switch provided at an input stage of the conversion unit 200b. In the case where the voltage V4 is larger than 90 V, the battery unit BU2 connected to the control unit CU2 may be charged by using the voltage V4. In other words, in the case of determining that there is not enough power for supply from a certain power generator, the conversion unit that processes the output from other power generator may be started.

Further, determination on whether to receive inputs from different power generators may be made one after the other. For instance, it is assumed that starting three conversion units that process the output from the solar power generator 3 is permitted, and starting one conversion unit that processes the output from the wind force power generator 4 is permitted by the schedule table STA. For instance, first determination is made on whether the voltage V3 is 90 V or more in the conversion unit 100a of the control unit CU1, and then, determination may be made whether the voltage V4 is 90 V or more in the conversion unit 200b of the control unit CU2. The determination in the conversion unit 100a and the determination in the conversion unit 200b may be made at the same time. Note that other processing is executed same as the processing described above.

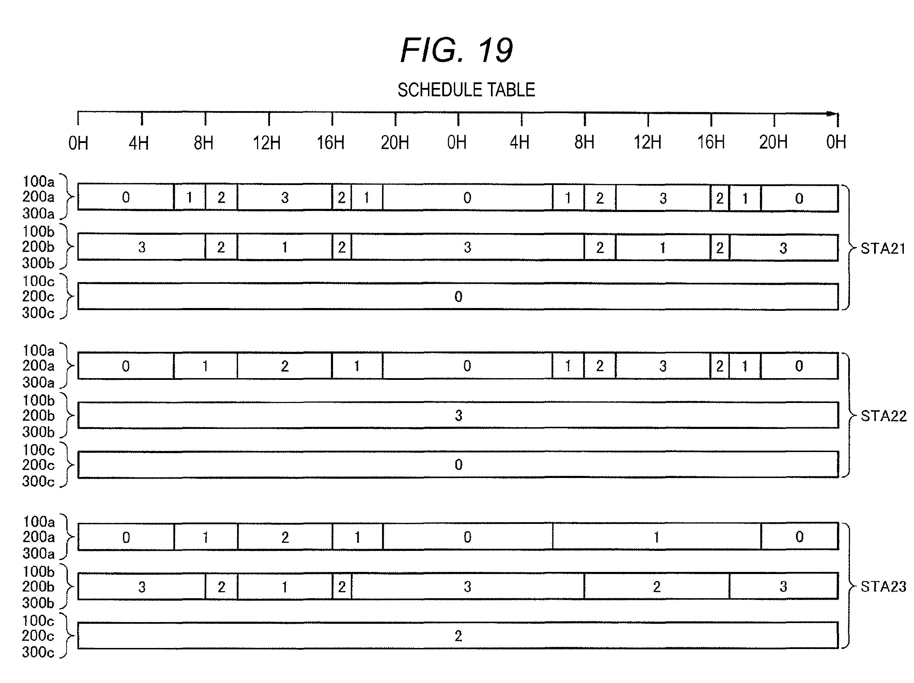

As illustrated in Fig. 19, a maximum number of the conversion units that can be started may be described in the schedule table STA. A schedule table STA21, a schedule table STA22, and a schedule table STA23 exemplified in Fig. 19 show schedules for two days. Normally, the schedule table STA21 is used. The schedule table STA22 is used in the case where a typhoon comes on the first day, and the weather gets better on the next day. The schedule table STA23 is used in the case where the weather is cloudy, rainy, and the like.

The schedule table STA21 will be described. Among the three conversion units (conversion unit 100a, conversion unit 200a, and conversion unit 300a) that process the output (voltage V3) from the solar power generator 3, the maximum number of the conversion units that can turned on in each time zone is described in the schedule table STA21. Among the three conversion units (conversion unit 100b, conversion unit 200b, and conversion unit 300b) that process the output voltage (voltage V4) from the wind force power generator 4, the maximum number of the conversion units that can be turned on in each time zone is described in the schedule table STA21. Among the three conversion units (conversion unit 100c, conversion unit 200c, and conversion unit 300c) that process the output voltage (voltage V5) from the biomass power generator 5, the maximum number of the conversion units that can be turned on in each time zone is described in the schedule table STA21.

The schedule table STA22 will be described. The wind is strong before and after the typhoon passes. Therefore, in the schedule table STA22, the maximum number (e.g., 3) is set such that as many conversion units as possible that process the output (voltage V4) of the wind force power generator 4 can be used. Further, after the typhoon has passed, the maximum number is set such that the conversion units that process the output voltage (voltage V3) of the solar power generator 3 can be used same as the normal state.

The schedule table STA23 will be described. In the cloudy day or rainy day, it can be considered that the output (voltage V3) of the solar power generator 3 is little. Therefore, among the three conversion units (conversion unit 100c, conversion unit 200c, and conversion unit 300c) that process the output (voltage V5) of the biomass power generator 5, the number of the conversion units that can be turned on is set to two such that the voltage V5 can be used.

Of course, the values indicated by the schedule table STA21, schedule table STA22, and schedule table STA23 are the maximum numbers of the conversion units that can be turned on, and the number of the conversion units actually turned on does not constantly conforms to the maximum number. The number of the conversion units actually turned on is suitably determined in accordance with the output and the like from each of the power generators.

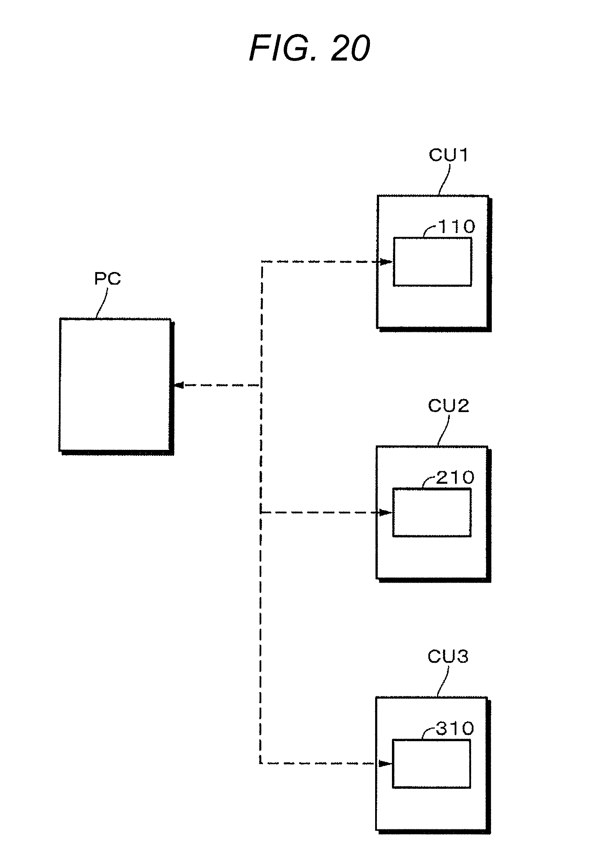

It has been described that the conversion unit 100 acquires the values of the input voltage in a time sharing manner according to the third embodiment, but the embodiment is not limited thereto. For instance, as illustrated in Fig. 20, a host controller connected to each of the control units CU may be provided. The host controller is formed of, for example, a personal computer (PC). The control command is transmitted from the personal computer PC to each of the CPUs (e.g., CPU 110, CPU210, and CPU310) of the respective control units CU. The CPU of each of the control units CU may be configured to acquire the value of input voltage (value acquired by a voltage sensor included in a predetermined conversion unit) in accordance with the control command, and determine whether the value of the input voltage is larger than 90 V.

### <4. Modified Example>

While an embodiment of the present disclosure has been described above, the present disclosure is not limited thereto and various modifications may be made. The configurations, operations, values, etc. according to the above-described plurality of embodiments are examples, and the contents of the present disclosure are not limited to the exemplified configurations and the like.

The present disclosure can be implemented not only as the device but also as a method, a program, and a storage medium.

Note that the configurations and operation according to the embodiments and the modified example may be suitably combined without departing from the technical spirit and scope of the present disclosure. The sequences of respective processing in the exemplified processing flows may be suitably changed without departing from the technical spirit and scope of the present disclosure.

The present disclosure may be applied to a so-called cloud system whereby the exemplified processing is executed by a plurality of devices in a distributed manner. The present disclosure may be implemented as a system whereby the exemplified processing is executed and as a device whereby at least a part of the exemplified processing is executed.

The present disclosure may also have the following configurations.
(1) A control system including:
   a plurality of first devices; and
   at least one second device connected to each of the plurality of first devices, wherein
   the first device includes a plurality of conversion units configured to convert first voltage supplied from a power generator to second voltage in accordance with a level of the first voltage,
   the second device includes a power storage unit and a charging control unit configured to control charging the power storage unit,
   the second voltage output from at least one conversion unit out of the plurality of conversion units is supplied to second device, and
   the charging control unit controls charging the power storage unit in accordance with fluctuation of the second voltage.
(2) The control system according to (1), wherein the conversion unit converts the first voltage such that the second voltage is increased in the case where the first voltage is increased, and converts the first voltage such that the second voltage is decreased in the case where the first voltage is decreased.
(3) The control system according to (1) or (2), wherein the charging control unit increases a charging rate toward the power storage unit in the case where the second voltage is increased, and decreases the charging rate toward the power storage unit in the case where the second voltage is decreased.
(4) The control system according to any of (1) to (3), wherein the different first voltage is supplied to each of the plurality of conversion units from the different power generator.
(5) The control system according to any of (1) to (4), wherein the power generator is at least one of a solar power generator, a wind force power generator, and a biomass power generator.
(6) The control system according to any of (1) to (5), wherein the second device is detachably attached to the first device.
(7) The control system according to any of (1) to (6), wherein the first voltage is supplied to the second device via a predetermined line.
(8) The control system according to any of (1) to (7), wherein the conversion unit includes a sensor configured to acquire a value of the first voltage.
(9) The control system according to any of (1) to (8), wherein the charging control unit includes a sensor configured to acquire a value of the second voltage.
(10) The control system according to any of (1) to (9), wherein the first device can communicate with the second device.

### REFERENCE SIGNS LIST

- 1: System
- 3: Solar power generator
- 4: Wind force power generator
- 5: Biomass power generator
- 100a, 100b, 100c: Conversion unit
- 101b, 142b: Voltage sensor
- 140: Charging control unit
- 110, 145, 210, 310: CPU
- CU: Control unit
- BU: Battery unit
- Ba: Battery
- V3, V4, V5, V10: Voltage
- L10: Power line
- STA: Schedule table

## Claims

1. A control system comprising:
a plurality of first devices; and
at least one second device connected to each of the plurality of first devices, wherein
the first device includes a plurality of conversion units configured to convert first voltage supplied from a power generator to second voltage in accordance with a level of the first voltage,
the second device includes a power storage unit and a charging control unit configured to control charging the power storage unit,
the second voltage output from at least one conversion unit out of the plurality of conversion units is supplied to second device, and
the charging control unit controls charging the power storage unit in accordance with fluctuation of the second voltage.

2. The control system according to claim 1, wherein the conversion unit converts the first voltage such that the second voltage is increased in the case where the first voltage is increased, and converts the first voltage such that the second voltage is decreased in the case where the first voltage is decreased.

3. The control system according to claim 1, wherein the charging control unit increases a charging rate toward the power storage unit in the case where the second voltage is increased, and decreases the charging rate toward the power storage unit in the case where the second voltage is decreased.

4. The control system according to claim 1, wherein the different first voltage is supplied to each of the plurality of conversion units from the different power generator.

5. The control system according to claim 4, wherein the power generator is at least one of a solar power generator, a wind force power generator, and a biomass power generator.

6. The control system according to claim 1, wherein the second device is detachably attached to the first device.

7. The control system according to claim 1, wherein the first voltage is supplied to the second device via a predetermined line.

8. The control system according to claim 1, wherein the conversion unit includes a sensor configured to acquire a value of the first voltage.

9. The control system according to claim 1, wherein the charging control unit includes a sensor configured to acquire a value of the second voltage.

10. The control system according to claim 1, wherein the first device can communicate with the second device.
